(19) Europäisches Patentamt
European Patent Office
Office européen des brevets

(11) **EP 3 041 879 B1**

(12) **EUROPEAN PATENT SPECIFICATION**

(45) Date of publication and mention
of the grant of the patent:
**25.05.2022 Bulletin 2022/21**

(21) Application number: **14780408.2**

(22) Date of filing: **02.09.2014**

(51) International Patent Classification (IPC):
**C08G 63/16** (2006.01)    **C08G 63/183** (2006.01)

(52) Cooperative Patent Classification (CPC):
**C08G 63/183; C08G 63/16**

(86) International application number:
**PCT/EP2014/002373**

(87) International publication number:
**WO 2015/028156 (05.03.2015 Gazette 2015/09)**

(54) **BIO-DERIVED ETHYLENE GLYCOL COMPOSITIONS FOR POLYESTER BOTTLES**

BIOLOGISCH ABGELEITETE ETHYLENGLYCOLZUSAMMENSETZUNGEN FÜR POLYESTERFLASCHEN

COMPOSITIONS D'ÉTHYLÈNE GLYCOL BIO-DÉRIVÉES POUR BOUTEILLES EN POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2013 IT TO20130711**

(43) Date of publication of application:
**13.07.2016 Bulletin 2016/28**

(73) Proprietor: **versalis S.p.A.**
**20097 San Donato Milanese (MI) (IT)**

(72) Inventors:
• **RIVAS TORRES, Beatriz**
**I-16011 Arenzano (IT)**
• **GIORDANO, Dario**
**I-15057 Tortona (IT)**
• **GHISOLFI, Guido**
**I-15057 Tortona (IT)**
• **BERNARDI, Marco**
**I-40141 Bologna (IT)**
• **TODARO, Daniela**
**I-20159 Milano (IT)**
• **BOZZANO, Irene**
**I-16157 Genova (IT)**
• **CRIPPA, Tommaso**
**I-28100 Novara (IT)**

(74) Representative: **Bottero, Carlo et al**
**Barzanò & Zanardo Milano S.p.A.**
**Via Borgonuovo, 10**
**20121 Milano (IT)**

(56) References cited:
**WO-A1-2008/071642    WO-A1-2012/174089**
**WO-A2-2007/014646**

• **None**

## Description

BACKGROUND

Ethylene glycol is an organic polyol having the structure designated by the IUPAC name 1,2-dihydroxyethane, Ethylene glycol is used in many industrial processes; in particular, it is a key raw material for the production of polyesters such as polyethylene terephthalate (PET), which is widely used in the manufacturing of products including but not limited to resins, performs, and packaging. The term "PET" refers to polyethylene terephthalate, its copolyesters, and combinations thereof in any form including PET flakes, pellets and recycled PET. The term "packaging" refers, but it is not limited to, PET packaging used for packaging food products, soft drinks, alcoholic beverages, detergents, cosmetics, pharmaceutical products and edible oils such as PET containers (which encompasses bottles) and PET secondary packaging, which is usually used for organizing and securing for transport, display, and storage of PET containers as well as for advertising the product contained within.

The use of PET for making many packaging articles requires excellent combination of clarity, mechanical and gas barrier properties. Thereby, the technical specification of raw components used in the manufacturing of PET are particularly stringent, specifically in terms of transparency in the visible and ultraviolet wavelength range.

Currently, ethylene glycol used in the manufacturing of PET is derived from petrochemical sources; the process may involve the hydration of ethylene oxide, made by the oxidation of ethylene. The oil-derived ethylene glycol meets technical specification (such as purity and optical properties) and industrial requirements in terms of availability and cast.

As cost, availability and environmental concerns of oil are becoming important issues, a strong interest is rising up to replace ethylene glycol from petrochemical sources by bio-based ethylene glycol obtained from renewable feedstocks.

US20100028512A1 disclosed methods for making a bio-based PET packaging and particularly to produce a bio-based PET from at least one bio-based PET component, wherein the bio-based PET component may be monoethylene glycol (MEG). According to some of the disclosed methods, MEG is refined from sugarcane molasse, corn starch, fruits peel, agricultural waste stream. According to another embodiment, sugarcane molasse is fermented to produce ethanol, which is refined into ethylene and then ethylene is refined into MEG, at least

one polyethylene and a combination thereof. As the process comprises many conversion steps, the final cast of ethylene glycol is expected to be not competitive with ethylene glycol from other sources, even if the purity of MEG obtained may be compliant to the technical specifications for PET packaging. US20100028512A1 thereby teaches only the use of a pure bio-based MEG stream far producing bio-based PET and do not disclose a bio- based composition comprising ethylene glycol suitable for PET packaging products.

It is known in the art that bio-based ethylene glycol may be obtained from a ligno-cellulosic biomass source by the conversion of the carbohydrates therein contained. Complex carbohydrates are first converted to simple sugars, which are then converted to molecules of lower molecular weight to farm compounds belonging to the glycol or polyol family. Hydrocracking conversion occurs usually in the presence of water, Hydrogen and an inorganic catalyst. Ali these catalytic processes do not produce bio-based ethylene glycol as a single reaction product, but bio-based ethylene glycol is instead a component of a mixture comprising many polyols. The disclosed polyols mixtures comprising ethylene glycol in general do not meet requirements for producing PET far packaging products. Namely, the presence of many polyols drastically reduces the transparency of the mixture.

US8198486 discloses methods for generating propylene glycol, ethylene glycol and other polyols, diols, ketones, aldehydes, carboxylic acids and alcohols from biomass. The methods involve reacting a portion of an aqueous stream of a biomass feedstock solution aver a catalyst under aqueous phase reforming conditions to produce hydrogen, and then reacting the hydrogen and the aqueous feedstock solution aver a catalyst to produce a generic mixture of propylene glycol, ethylene glycol and the other polyols, diols, ketones, aldehydes, carboxylic acids and alcohols.

US20110312051 disclosed a process for generating at least one polyol from a feedstock comprising saccharide performed in a continuous or batch manner. The process involves contacting hydrogen, water, and a feedstock comprising saccharide, with a catalyst system to generate an effluent stream comprising at least one polyol and recovering the polyol from the effluent stream. The polyol may be selected from the group consisting of ethylene glycol and propylene glycol.

US2008103340 discloses a composition comprising a hydrogenolysis product comprising a mixture of propylene glycol, ethylene glycol, and one or more of methanol, 2-propanol, glycerol, lactic acid, glyceric acid, butanediols, sodium lactate, and sodium glycerate. The hydrogenolysis product mixture may be at least partially purified by a purification method prior to being used as a replacement, either total or partial, for petroleum derived glycols. According to certain embodiments, the at least partially purified hydrogenolysis product may be used as a replacement for petroleum derived propylene glycol or ethylene glycol.

No specific reference to a composition comprising ethylene glycol suitable to PET packaging products is made in the cited applications.

According to the prior art, the polyols mixture may then be processed to produce pure or almost pure glycol streams. As a purification/separation process of a mixture of many polyols having similar chemical and physical properties is critical, it adds an additional cost to the final product, which could be relevant for enabling the real applicability of the bio-based composition for PET packaging applications. As an example, WO2008057317 discloses a process for separating ethylene glycol or propylene glycol from mixtures containing the ethylene glycol or the propylene glycol and other polyols using polar compounds. The application discloses also an isolated or purified bio-based propylene glycol, an isolated or purified bio-based ethylene glycol, or a combination thereof, having less than 0.2 weight percent of 1,2-butanediol, 2,3-butanediol or a combination thereof. WO 2007/014646 A2 discloses a polyester resin made from a composition comprising a plurality of diols comprising ethylene glycol, and at least one alkane-1,2-diol. The compositions are used in the manufacture of polyester bottles.

## SUMMARY OF INVENTION

The invention relates to a polyester bottle or polyester preform as recited in claim 1.

It is disclosed a composition comprising a plurality of diols comprising ethylene glycol, and diols selected from the group of diols having a formula of $C_nH_z(OH)_2$, where n is the total number of carbons and is an integer in the range from 3 to 20, z is an integer in the range from 0 to 2n, and C1 and C2 are each attached to an OH and the number moles of ethylene glycol and the number of moles of diols selected from the group of diols having a formula of $C_nH_2(OH)_2$ add up to 100 mole % of the plurality of diols. The composition is substantially free of diols which absorb light at a wavelength of 275nm, so that the percent light transmission of the composition at a wavelength of 275nm is greater than 40%, preferably greater than 50%, more preferably greater than 60%, even more preferably greater than 70%, even yet more preferably greater than 80%, most preferably greater than 90% and even most preferably greater than 95%.

It is also disclosed that the plurality of diols may further comprise at least one cyclic diol of the formula $C_mH_x(OH)_2$, where m is the total number of carbon atoms and is an integer greater than 4 and x= 2m-2.

It is further disclosed that the molar percent amount of ethylene glycol in the plurality of diols may be greater than a value selected from the group consisting of 80%, 85%, 90%, 95% and 98%.

It is also disclosed that at least one diol of the formula $C_nH_z(OH)_2$ may be further selected from the group consisting of 1,2-Propylene glycol, 1,2-Butanediol and 1,2-Pentanediol.

It is further disclosed that 1,2-Propylene glycol may be present at less than a value selected from the group consisting of 15%, 12%, 10%, 7%, 5%, 3% and 2% mole percent of the plurality of diols.

It is also disclosed that 1,2- Butanediol may be present at less than a value selected from the group consisting of 10%, 8%, 5%, 3%, 2% and 1% mole percent of the plurality of diols.

It is further disclosed that 1,2- Pentanediol may be present at less than a value selected from the group consisting of 5%, 4%, 3%, 2% and 1% mole percent of the plurality of diols.

It is also disclosed that the plurality of diols may further comprise at least one cyclic diol of the formula $C_mH_x(OH)_2$, where m is the total number of carbon atoms and is an integer greater than 4 and x= 2m-2, and C1 and C2 are each attached to an OH, and that the at least one cyclic diol of the formula $C_mH_x(OH)_2$ is preferably present at less than a value selected from the group consisting of 2%, 1.5%, 1%, 0.5%, 0.3% and 0.2% mole percent of the plurality of diols.

It is further disclosed that the at least one cyclic diol of the formula $C_mH_x(OH)_2$ is preferably selected from the group consisting of 1,2-Cyclopentanediols, 1,2-Cyclohexanediols and 1,2-Cycloheptanediols.

It is also disclosed that the percent light transmission of the plurality of diols at a wavelength of 275nm may be greater than a value selected from the group consisting of 40%, 50%, 60%,70%, 80%, 90% and 95%.

It is further disclosed that at least 25%, preferably at least 50%, more preferably at least 75% of the plurality of diols may be comprised of bio-based diols obtained from the conversion of a ligno-cellulosic biomass feedstock stream, and that the plurality of diols may comprise petroleum derived ethylene glycol.

It is also disclosed that the percent light transmission of the bio-based diols at a wavelength of 275nm may be less than the percent light transmission of the plurality of diols at a wavelength of 275nm.

It is further disclosed that the whole plurality of diols may be comprised of bio-based diols obtained from the conversion of a ligno-cellulosic biomass feedstock stream.

It is also disclosed that at least a portion of the plurality of diols obtained from the conversion of a ligno-cellulosic biomass feedstock stream may have been obtained from a liquid stream comprising of solubilized C5 and C6 sugars which have been removed from the ligno-cellulosic biomass feedstock stream and the amount of solubilized C5 sugars in the liquid stream is greater than the amount of solubilized C6 sugars.

It is further disclosed that the disclosed composition may be used for producing a polyester resin.

It is also disclosed that the polyester may comprise acid moieties and at least 85 mole % of the acid moieties are derived from terephthalic acid or its dimethyl ester.

It is further disclosed that the polyester resin may be used for producing a polyester bottle.

## BRIEF DESCRIPTION OF DRAWINGS

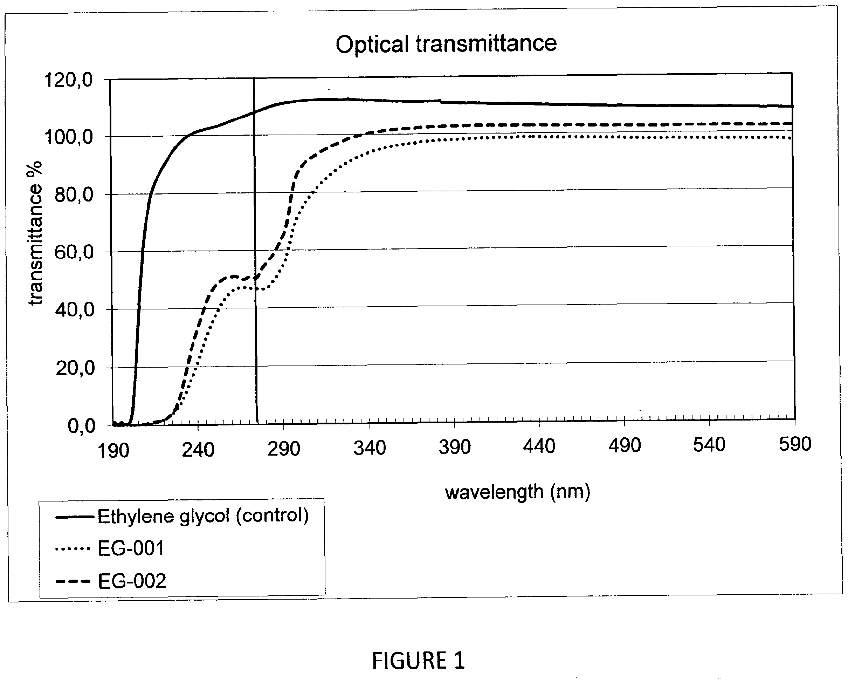

Figure 1 shows the graph of optical transmittance in the UV and visible range of a control sample (petroleum-derived ethylene glycol) and two bio-based samples according to the disclosed composition.

## DESCRIPTION

According to one aspect of the invention, it is disclosed a composition comprising a plurality of diols having a high optical transmittance in the ultraviolet and visible optical bands. In particular, the optical transmittance is such that the composition may be used for producing a polyester with excellent optical properties, as required by packaging applications.

The diols for the plurality of diols are bio-based diols. It is therefore also disclosed that polyester preforms and polyester bottles may be made from a polyester resin derived from diols units, comprising a plurality of bio-based diols, said plurality having a high optical transmittance in the ultraviolet and visible optical bands. The optical transmittance of the plurality of bio-based diols is such that the plurality of bio-based diols may be used for producing a polyester resin with excellent optical properties, as required by packaging applications, in particular for making preforms and bottles.

The plurality of diols of the disclosed composition comprises ethylene glycol, and diols of the general formula $C_nH_z(OH)_2$, wherein there is an OH group attached to C1 and C2, which are the first two Carbon atoms in the diol molecule, according to the standard representation of organic chemistry. In the formula, z is an integer in the range from 0 to 2n. In the present disclosure, these diols will be indicated as 1,2-diols. Even if 1,2-diols molecules may comprise a high number of Carbon atoms n, the plurality of diols preferably comprises 1,2-diols with small n, such as 1,2-propylene glycol, 1,2-butanediol and 1,2 pentanediol.

The disclosed composition is substantially free of diols which absorb significant amount of light in the ultraviolet and visible optical bands. Consequently the plurality of diols are also substantially free of diols which absorb significant amount of light in the ultraviolet and visible optical bands.

According to another embodiment of the present invention, the plurality of diols, which would include the bio-based diols if present, may comprise also cyclic diols represented by the formula $C_mH_x(OH)_2$, wherein the number of Carbon m is greater than 4 and x=2m-2. Cyclic diols molecules preferably contain a small number of Carbon atoms, such as Cyclopentanediols, Cyclohexanediols and Cycloheptanediols. Preferably, there is an OH group attached to the first two Carbon atoms in the cyclic diol molecule. In the present disclosure, these diols will be indicated as 1,2-cyclic diols.

Inventors surprisingly discovered that the particular plurality of diols of the present disclosure has an excellent optical transmittance, and that it may be used to produce a polyester with physical and chemical properties similar to a polyester produced with pure ethylene glycol. The polyester may be produced in the form of a resin which be further converted into a preform and/or bottle as described below.

According to one aspect of the invention, a portion of the plurality of diols may be derived from petroleum. As used herein, the term "petroleum derived" refers to a product derived from or synthesized from petroleum or a petrochemical feedstock.

According to another aspect of the invention, the plurality of diols of the disclosed composition are comprised of bio-based diols. By the term "bio-based" it is meant a product derived from or synthesized by a renewable biological feedstock, such as, for example, an agricultural, forestry, plant, bacterial, or animal feedstock. The plurality of diols of the disclosed composition may also be consist of bio-based diols or alternatively, 100% by weight or moles of the plurality of diols are bio-based diols.

A bio-based product differs from the corresponding petrochemical-derived product by the isotopic abundance of contained Carbon. It is known in art that there are three Carbon isotopes (namely $^{12}$C, $^{13}$C and $^{14}$C), and that isotopic ratios of the isotopes of carbon, such as the $^{13}$C/$^{12}$C carbon isotopic ratio or the $^{14}$C/$^{12}$C carbon isotopic ratio, are different in petrochemical derived products and bio-based products due to different chemical processes and isotopic fractionation. In addition, radioactive decay of the unstable $^{14}$C carbon radioisotope leads to different isotope ratios in bio-based products compared to petrochemical derived products. Measurements of isotopic abundance may be performed, for example, by liquid scintillation counting, accelerator mass spectrometry, or high precision isotope ratio mass spectrometry.

Bio-based content of a product may be verified by ASTM International Radioisotope Standard Method D6866. ASTM International Radioisotope Standard Method D6866 determines bio-based content of a material based on the amount of bio-based carbon in the material or product as a percent of the weight (mass) of the total organic carbon in the material or product. Bio-based products will have a carbon isotope ratio characteristic of a biologically derived composition.

According to another aspect of the invention, a portion of the disclosed plurality of diols is comprised of bio-based diols. The remnant part may be comprised of petroleum-derived diols, preferably petroleum-derived ethylene glycol. That is, the disclosed plurality of diols may be a blend, or a mixture, of bio-based ethylene glycol and bio-based 1,2-diols and petroleum derived ethylene glycol. Alternatively, at least a portion of the plurality of diols comprises bio-based biols with the remaining portion being petroleum derived ethylene glycol. As a result, the optical properties of the disclosed plurality of diols shall depend on the optical properties of the bio-based and petroleum-derived portions. Thereby, the optical properties of the bio-based portion of the plurality of diols may be tailored to meet specific target, by adding, mixing, blending a portion of petroleum derived 1,2-diols, preferably ethylene glycol.

According to another aspect of the invention, the bio-based diols of the disclosed plurality of diols are obtained from a ligno-cellulosic feedstock. Ligno-cellulosic feedstock comprises glucans and xylans, which are mainly composed of complex insoluble C6 and C5 sugars respectively. Preferably, the bio-based diols of the disclosed plurality of diols are obtained from the conversion of a solubilized C5 sugars-rich stream, as C5 sugars represent a low-value stream which may be derived from the ligno-cellulosic biomass. As examples, C5 sugars rich-streams are produced as a by-product in the pulp and paper industry, or may be produced by subjecting the ligno-cellulosic feedstock to a thermal, chemical or hydrothermal process. The C5-rich stream may be converted to a polyols mixture by means of a catalytic process in the presence of Hydrogen gas. Said process may comprise a hydrogenation and a hydrogenolysis step. The polyols mixture is then conditioned, or refined, by means of suitable combination of separation, evaporation and distillation steps to produce different diols and polyols streams. As diols in the polyols mixture may have similar properties, such as for instance similar boiling point, obtaining pure streams may be difficult and many distillation steps may be needed, thereby increasing the equipment and operation costs.

Inventors have found that it is relatively simple to separate a stream comprising the plurality of diols of the disclosed composition from the polyols mixture, as the diols have similar boiling points which are different from the boiling points of the remnant polyols in the mixture.

Inventors have also found that the plurality of diols of the disclosed composition has physical and chemical properties similar enough to the technical requirements of pure ethylene glycol to produce a polyester bottle and/or polyester preform. Thereby, according to another aspect of the invention, the disclosed composition may replace at least a portion, preferably all, the petroleum-derived ethylene glycol used for producing polyester resins, preforms and bottles.

**The Composition's Diols**

The disclosed composition comprises a plurality of diols which are bio-based diols.

Ethylene glycol is the main component of the plurality of diols, as the amount of ethylene glycol, expressed as molar percent with respect to the plurality of diols, is preferably greater than 80%. In preferred embodiments, the molar amount of ethylene glycol is greater than 85%, being greater than 90% more preferable, greater than 95% even more preferable and greater than 98% the most preferable value. As described earlier, the ethylene glycol may be petroleum derived, bio-based, or a mixture of both. Accordingly, the molar amount of bio-based ethylene glycol, expressed as molar percent with respect to all the moles of diols in the plurality of diols, is greater than 80%, being greater than 85% more preferable, greater than 90% even more preferable, greater than 95% even yet more preferable and greater than 98% the most preferable value.

The composition may also only consist of the plurality of diols. It is these diols which are reacted with the diacid or diacids to produce the polyester resin used in th preform and bottle.

The plurality of diols further comprises diols of the general formula $C_nH_z(OH)_2$, with the prescription that there is an OH group attached to the Carbon atom $C_1$ on the diol molecule and another OH group attached to the close Carbon atom $C_2$. The number of carbon atoms may vary in the range from 3 to 20, and z is an integer in the range of 0 to 2n.

Preferably, the diols have a low number, n, of Carbon atoms, more preferably n is less than 5 and thereby the diols are selected from 1,2-Propylene glycol, 1,2-Butanediol and 1,2-Pentanediol.

In a preferred embodiment, the plurality of diols comprises 1,2 Propylene glycol (3 carbon atoms per diol molecule), and the percent molar amount of 1,2 Propylene glycol with respect to the plurality of diols is preferably less than 15%, more preferably less than 12%, even more preferably less than 10%, even yet more preferable less than 7%, even yet more preferable less than 5%, most preferably less than 3%, with less than 2% the even most preferred value.

In another preferred embodiment, the plurality of diols comprises 1,2- Butanediol (4 carbon atoms per diol molecule), the percent molar amount of 1,2- Butanediol with respect to the plurality of diols is preferably less than 10%, more preferably less than 8%, even more preferably less than 5%, even yet more preferable less than 3%, most preferably less than 2%, with less than 1% the even most preferred value.

In a preferred embodiment, the plurality of diols comprises 1,2- Pentanediol (5 carbon atoms per diol molecule), the percent amount of 1,2- Pentanediol with respect to the plurality of diols is preferably less than 5%, more preferably less than 4%, even more preferably less than 3%, even yet more preferable less than 2% and most preferably less than 1%.

Preferably, the plurality of diols comprises two 1,2-diols, even more preferably it comprises three 1,2-diols. Most preferably, the plurality of diols comprises 1,2-Propylene glycol, 1,2-Butanediol and 1,2-Pentanediol.

The plurality of diols of the disclosed composition has optical properties such that the disclosed composition is compliant to the optical requirements of pure ethylene glycol for producing polyester resins, preforms and bottles. In particular, the percent light transmission of the composition at a wavelength of 275nm is greater than 40%, preferably greater than 50%, even more preferably greater than 60%, even yet more preferably greater than 70%, 80%, most preferably greater than 90% and even most preferably greater than 95%. Optical transmission may be measured according to the standard protocol reported in the experimental section of the present disclosure.

In an even more preferred embodiment, the plurality of diols of the disclosed composition has optical properties compliant to the technical requirements of pure ethylene glycol for producing polyester resins, in particular polyester container resins used in polyester preforms and bottles. In particular, the percent light transmission of the plurality of diols in the disclosed composition at a wavelength of 275nm is greater than 40%, preferably greater than 50%, even more preferably greater than 60%, even yet more preferably greater than 70%, 80%, most preferably greater than 90% and even most preferably greater than 95%. Optical transmission may be measured according to the standard protocol reported in the experimental section of the present disclosure.

The plurality of diols may further comprise other diols with the specific prescription that the plurality of diols is substantially free of diols which absorb light in the visible and ultraviolet optical bands. By the expression "substantially free of diols" it is meant that the composition may further comprise a small percent molar amount of diols having a not negligible optical absorbance at a wavelength of 275nm, provided that the total optical transmittance of the plurality of the disclosed composition is within the claimed ranges. As in general the absorbance/transmittance of different diols may vary over a wide range, a person skilled in the art may easily determine the corresponding maximum admissible percent molar amount of a diol according to the prescription that the optical transmittance of the composition is within the claimed ranges. Preferably, the diol units are substantially free of bio-based diols which absorb light in the visible and ultraviolet optical bands.

As an example, in one embodiment the plurality of diols comprises at least one cyclic diol with more than 4 carbon atoms, preferably selected from the group consisting of the families of Cyclopentanediols, Cyclohexanediols and Cycloheptanediols; more preferably cyclic diols are present as 1,2-cyclic diols. Cyclic diols have a significant light absorbance at 275nm. The total percent molar amount of cyclic diols of the total moles of diols in the plurality of diols is preferably less than 2%, more preferably less than 1.5%, even more preferably less than 1%, even yet more preferably less than 0.5%, most preferably less than 0.3%, 0.2%.

**Origin of the composition, in particular the bio-based diols**

At least a portion of the plurality of diols is comprised of bio-based diols, as determined according to the ASTM International Radioisotope Standard Method D6866. Preferably, at least 25% of the total moles of diols, more preferably at least 50% of the total moles of diols, and most preferably at least 75% of the total moles of diols of the plurality of diols are comprised of bio-based diols. The non-bio-based portion may then be comprised of petroleum derived 1,2-diols, so as to tune, or improve, the optical properties of the plurality of diols. In this case, the percent light transmission of the bio-based diols at a wavelength of 275nm may be less than the percent light transmission of the plurality of diols at a wavelength of 275nm.

Preferably, at least a portion of the petroleum derived diols is comprised of ethylene glycol.

In another preferred embodiment, the whole plurality of diols is comprised of bio-based diols.

Even if the bio-based may be obtained from the conversion of any renewable biological feedstock, such as, for example, an agricultural, forestry, plant, bacterial, or animal feedstock, in a preferred embodiment ligno-cellulosic biomass feedstock is used as feedstock.

For the scope of the present disclosure, a ligno-cellulosic biomass feedstock comprises xylans and glucans, which are insoluble complex sugars based on C5 and C6 sugars. The ligno-cellulosic biomass feedstock is preferably subjected to a thermal treatment in order to solubilize at least a portion of insoluble C5 and C6 sugars of the ligno-cellulosic biomass, wherein said solubilized C5 and C6 sugars are present as soluble oligomers and monomers. As the C5 insoluble sugars may be solubilized more easily but are more sensitive to thermal degradation than C6 insoluble sugars, the thermal treatment is preferably conducted in conditions to solubilize more preferentially C5 insoluble sugars than C6 insoluble sugars. Thereby, in a preferred embodiment, the plurality of diols is obtained from the conversion of a liquid stream comprising an amount of solubilized C5 sugars which is greater than the amount of solubilized C6.

**Ligno-cellulosic biomass feedstock**

In general, a ligno-cellulosic biomass can be described as follows:
Apart from starch, the three major constituents in plant biomass are cellulose, hemicellulose and lignin, which are commonly referred to by the generic term lignocellulose. Polysaccharide-containing biomasses as a generic term includes both starch and ligno-cellulosic biomasses. Therefore, some types of feedstocks can be plant biomass, polysaccharide containing biomass, and ligno-cellulosic biomass which may or may not contain starch.

Polysaccharide-containing biomasses according to the present invention include any material containing polymeric sugars e.g. in the form of starch as well as refined starch, cellulose and hemicellulose.

Relevant types of biomasses for deriving the claimed invention may include biomasses derived from agricultural crops selected from the group consisting of starch containing grains, refined starch; corn stover, bagasse, straw e.g. from rice, wheat, rye, oat, barley, rape, sorghum; softwood e.g. Pinus sylvestris, Pinus radiate; hardwood e.g. Salix spp. Eucalyptus spp.; tubers e.g. beet, potato; cereals from e.g. rice, wheat, rye, oat, barley, rape, sorghum and corn; waste paper, fiber fractions from biogas processing, manure, residues from oil palm processing, municipal solid waste or the like.

In one embodiment, the ligno-cellulosic biomass feedstock used in the process is from the family usually called grasses. The proper name is the family known as Poaceae or Gramineae in the Class Liliopsida (the monocots) of the flowering plants. Plants of this family are usually called grasses, or, to distinguish them from other graminoids, true grasses. Bamboo is also included. There are about 600 genera and some 9,000-10,000 or more species of grasses (Kew Index of World Grass Species).

Poaceae includes the staple food grains and cereal crops grown around the world, lawn and forage grasses, and bamboo. Poaceae generally have hollow stems called culms, which are plugged (solid) at intervals called nodes, the points along the culm at which leaves arise. Grass leaves are usually alternate, distichous (in one plane) or rarely spiral, and parallel-veined. Each leaf is differentiated into a lower sheath which hugs the stem for a distance and a blade with margins The leaf blades of many grasses are hardened with silica phytoliths, which helps discourage grazing animals. In some grasses (such as sword grass) this makes the edges of the grass blades sharp enough to cut human skin. A membranous appendage or fringe of hairs, called the ligule, lies at the junction between sheath and blade, preventing water or insects from penetrating into the sheath.

Grass blades grow at the base of the blade and not from elongated stem tips. This low growth point evolved in response to grazing animals and allows grasses to be grazed or mown regularly without severe damage to the plant.

Flowers of Poaceae are characteristically arranged in spikelets, each spikelet having one or more florets (the spikelets are further grouped into panicles or spikes). A spikelet consists of two (or sometimes fewer) bracts at the base, called glumes, followed by one or more florets. A floret consists of the flower surrounded by two bracts called the lemma (the external one) and the palea (the internal). The flowers are usually hermaphroditic (maize, monoecious, is an exception) and pollination is almost always anemophilous. The perianth is reduced to two scales, called lodicules, that expand and contract to spread the lemma and palea; these are generally interpreted to be modified sepals.

The fruit of Poaceae is a caryopsis in which the seed coat is fused to the fruit wall and thus, not separable from it (as in a maize kernel).

There are three general classifications of growth habit present in grasses; bunch-type (also called caespitose), stoloniferous and rhizomatous.

The success of the grasses lies in part in their morphology and growth processes, and in part in their physiological diversity, Most of the grasses divide into two physiological groups, using the C3 and C4 photosynthetic pathways for carbon fixation. The C4 grasses have a photosynthetic pathway linked to specialized Kranz leaf anatomy that particularly adapts them to hot climates and an atmosphere low in carbon dioxide.

C3 grasses are referred to as "cool season grasses" while C4 plants are considered "warm season grasses". Grasses may be either annual or perennial. Examples of annual cool season are wheat, rye, annual bluegrass (annual meadowgrass, Poa annua and oat). Examples of perennial cool season are orchard grass (cocksfoot, Dactylis glomerata), fescue (Festuca spp), Kentucky Bluegrass and perennial ryegrass (Lolium perenne). Examples of annual warm season are corn, sudangrass and pearl millet. Examples of Perennial Warm Season are big bluestem, indian grass, bermuda grass and switch grass.

One classification of the grass family recognizes twelve subfamilies: These are 1) anomochlooideae, a small lineage of broad-leaved grasses that includes two genera (Anomochloa, Streptochaeta); 2) Pharoideae, a small lineage of grasses that includes three genera, including Pharus and Leptaspis; 3) Puelioideae a small lineage that includes the African genus Puelia; 4) Pooideae which includes wheat, barley, oats, brome-grass (Bronnus) and reed-grasses (Calamagrostis); 5) Bambusoideae which includes bamboo; 6) Ehrhartoideae, which includes rice, and wild rice; 7) Arundinoideae, which includes the giant reed and common reed; 8) Centothecoideae, a small subfamily of 11 genera that is sometimes included in Panicoideae; 9) Chloridoideae including the lovegrasses (Eragrostis, ca. 350 species, including teff), dropseeds (Sporobolus, some 160 species), finger millet (Eleusine coracana (L.) Gaertn.), and the muhly grasses (Muhlenbergia, ca. 175 species); 10) Panicoideae including panic grass, maize, sorghum, sugar cane, most millets, fonio and bluestem grasses; 11) Micrairoideae and 12) Danthoniodieae including pampas grass; with Poa which is a genus of about 500 species of grasses, native to the temperate regions of both hemispheres.

Agricultural grasses grown for their edible seeds are called cereals. Three common cereals are rice, wheat and maize (corn). Of all crops, 70% are grasses.

Sugarcane is the major source of sugar production. Grasses are used for construction. Scaffolding made from bamboo is able to withstand typhoon force winds that would break steel scaffolding. Larger bamboos and Arundo donax have stout culms that can be used in a manner similar to timber, and grass roots stabilize the sod of sod houses. Arundo is used to make reeds for woodwind instruments, and bamboo is used for innumerable implements.

Another ligno-cellulosic biomass feedstock may be woody plants or woods. A woody plant is a plant that uses wood as its structural tissue. These are typically perennial plants whose stems and larger roots are reinforced with wood produced adjacent to the vascular tissues. The main stem, larger branches, and roots of these plants are usually covered by a layer of thickened bark. Woody plants are usually either trees, shrubs, or lianas. Wood is a structural cellular adaptation that allows woody plants to grow from above ground stems year after year, thus making some woody plants the largest and tallest plants.

These plants need a vascular system to move water and nutrients from the roots to the leaves (xylem) and to move sugars from the leaves to the rest of the plant (phloem). There are two kinds of xylem: primary that is formed during primary growth from procambium and secondary xylem that is formed during secondary growth from vascular cambium.

What is usually called "wood" is the secondary xylem of such plants.

The two main groups in which secondary xylem can be found are:

1) conifers (Coniferae): there are some six hundred species of conifers. All species have secondary xylem, which is relatively uniform in structure throughout this group. Many conifers become tall trees: the secondary xylem of such trees is marketed as softwood.

2) angiosperms (Angiospermae): there are some quarter of a million to four hundred thousand species of angiosperms. Within this group secondary xylem has not been found in the monocots (e.g. Poaceae). Many non-monocot angiosperms become trees, and the secondary xylem of these is marketed as hardwood.

The term softwood is used to describe wood from trees that belong to gymnosperms. The gymnosperms are plants with naked seeds not enclosed in an ovary. These seed "fruits" are considered more primitive than hardwoods. Softwood trees are usually evergreen, bear cones, and have needles or scale like leaves. They include conifer species e.g. pine, spruces, firs, and cedars. Wood hardness varies among the conifer species.

The term hardwood is used to describe wood from trees that belong to the angiosperm family. Angiosperms are plants with ovules enclosed for protection in an ovary. When fertilized, these ovules develop into seeds. The hardwood trees are usually broad-leaved; in temperate and boreal latitudes they are mostly deciduous, but in tropics and subtropics mostly evergreen. These leaves can be either simple (single blades) or they can be compound with leaflets attached to a leaf stem. Although variable in shape all hardwood leaves have a distinct network of fine veins. The hardwood plants include e.g. Aspen, Birch, Cherry, Maple, Oak and Teak.

Therefore, in one embodiment, a suitable ligno-cellulosic biomass may be selected from the group consisting of the grasses and woods. In one embodiment, the ligno-cellulosic biomass can be selected from the group consisting of the plants belonging to the conifers, angiosperms, Poaceae and families. In one embodiment, Another preferred ligno-cellulosic biomass may be that biomass having at least 10% by weight of it dry matter as cellulose, or more preferably at least 5% by weight of its dry matter as cellulose.

## Thermal treatment to derive the liquid C5-rich sugar stream from the ligno-cellulosic feedstock

According to a preferred embodiment, the plurality of diols of the disclosed composition is obtained from a ligno-cellulosic biomass feedstock. More preferably, the ligno-cellulosic biomass feedstock is treated to produce a liquid stream comprising solubilized C5 and C6 sugars, wherein the amount of solubilized C5 sugars is greater than the amount of solubilized C6 sugars. The treatment, also indicated as pre-treatment, is used to solubilize and remove carbohydrates, mainly xylans and glucans, from the ligno-cellulosic feedstock, and at the same time the concentrations of harmful inhibitory by-products such as acetic acid, furfural and hydroxymethyl furfural remain substantially low.

Pre-treatment techniques which may be used are well known in the art and include physical, chemical, and biological pre-treatment, or any combination thereof. In preferred embodiments the pre-treatment of ligno-cellulosic biomass is carried out as a batch or continuous process.

Physical pre-treatment techniques include various types of milling/comminution (reduction of particle size), irradiation

Comminution includes dry, wet and vibratory ball milling.

Although not needed or preferred, chemical pre-treatment techniques include acid, dilute acid, base, organic solvent, lime, ammonia, sulfur dioxide, carbon dioxide, pH-controlled hydrothermolysis, wet oxidation and solvent treatment.

If the chemical treatment process is an acid treatment process, it is more preferably, a continuous dilute or mild acid treatment, such as treatment with sulfuric acid, or another organic acid, such as acetic acid, citric acid, tartaric acid, succinic acid, or any mixture thereof. Other acids may also be used. Mild acid treatment means at least in the context of the invention that the treatment pH lies in the range from 1 to 5, preferably 1 to 3.

In a specific embodiment the acid concentration is in the range from 0.1 to 2.0 % wt acid, preferably sulfuric acid. The acid is mixed or contacted with the ligno-cellulosic biomass and the mixture is held at a temperature in the range of around 160-220 °C for a period ranging from minutes to seconds. Specifically the pre-treatment conditions may be the following: 165-183 °C, 3-12 minutes, 0.5-1.4% (w/w) acid concentration, 15-25, preferably around 20% (w/w) total solids concentration. Other contemplated methods are described in U.S. Pat. Nos. 4,880,473, 5,366,558, 5,188,673, 5,705,369 and 6,228,177.

Wet oxidation techniques involve the use of oxidizing agents, such as sulfite based oxidizing agents and the like. Examples of solvent treatments include treatment with DMSO (Dimethyl Sulfoxide) and the like. Chemical treatment processes are generally carried out for about 5 to about 10 minutes, but may be carried out for shorter or longer periods of time.

In an embodiment both chemical and physical pre-treatment is carried out including, for example, both mild acid treatment and high temperature and pressure treatment. The chemical and physical treatment may be carried out sequentially or simultaneously.

The current strategies of thermal treatment are subjecting the ligno-cellulosic material to temperatures between 110-250°C for 1-60 min e.g.:

Hot water extraction

Multistage dilute acid hydrolysis, which removes dissolved material before inhibitory substances are formed Dilute acid hydrolysis at relatively low severity conditions

Alkaline wet oxidation

Steam explosion

Almost any pre-treatment with subsequent detoxification.

If a hydrothermal pre-treatment is chosen, the following conditions are preferred:

Pre-treatment temperature: 110-250°C, preferably 120-240°C, more preferably 130-230°C, more preferably 140-220°C, more preferably 150-210°C, more preferably 160- 200°C, even more preferably 170-200°C or most preferably 180-200°C.

Pre-treatment time: 1-60 min, preferably 2-55 min, more preferably 3-50 min, more preferably 4-45 min, more preferably 5-40 min, more preferably 5-35 min, more preferably 5-30 min, more preferably 5-25 min, more preferably 5-20 min and most preferably 5-15 min.

Dry matter content after pre-treatment is preferably at least 20% (w/w). Other preferable higher limits are contemplated as the amount of biomass to water in the pre-treated ligno-cellulosic feedstock be in the ratio ranges of 1:4 to 9:1; 1.3.9 to 9:1, 1:3.5 to 9:1, 1:3.25 to 9:1, 1:3 to 9:1, 1:2.9 to 9:1, 1:2 to 9:1, 1.15 to 9:1, 1:1 to 9:1, and 1:0.9 to 9:1.

A preferred pre-treatment process is the two step soak/extract, optionally followed by steam explosion as described below.

A preferred pretreatment of a ligno-cellulosic biomass include a soaking of the ligno-cellulosic biomass feedstock and optionally a steam explosion of at least a part of the soaked ligno-cellulosic biomass feedstock.

The soaking occurs in a substance such as water in either vapor form, steam, or liquid form or liquid and steam together, to produce a product. The product is a soaked biomass containing a soaking liquid, with the soaking liquid usually being water in its liquid or vapor form or some mixture.

This soaking can be done by any number of techniques that expose a substance to water, which could be steam or liquid or mixture of steam and water, or, more in general, to water at high temperature and high pressure. The temperature should be in one of the following ranges: 145 to 165°C, 120 to 210°C, 140 to 210°C, 150 to 200°C, 155 to 185°C, 160 to 180°C. Although the time could be lengthy, such as up to but less than 24 hours, or less than 16 hours, or less than 12 hours, or less than 9 hours or less than 6 hours; the time of exposure is preferably quite short, ranging from 1 minute to 6 hours, from 1 minute to 4 hours, from 1 minute to 3 hours, from 1 minute to 2.5 hours, more preferably 5 minutes to 1.5 hours, 5 minutes to 1 hour, 15 minutes to 1 hour.

If steam is used, it is preferably saturated, but could be superheated. The soaking step can be batch or continuous, with or without stirring.

Either soaking step could also include the addition of other compounds, e.g. H2SO4, NH3, in order to achieve higher performance later on in the process.

The product comprising the soaking liquid, or soaked liquid, is then passed to a separation step where at least a portion of the soaking liquid is separated from the soaked biomass. The liquid will not completely separate so that at least a portion of the soaking liquid is separated, with preferably as much soaking liquid as possible in an economic time frame. The liquid from this separation step is known as the soaked liquid stream comprising the soaking liquid. The solid biomass is called the first solid stream as it contains most, if not all, of the solids.

The separation of the soaked liquid can again be done by known techniques and likely some which have yet been invented. A preferred piece of equipment is a press, as a press will generate a liquid under high pressure.

The first solid stream may then optionally be steam exploded to create a steam exploded stream, comprising solids. Steam explosion is a well-known technique in the biomass field and any of the systems available today and in the future are believed suitable for this step. The severity of the steam explosion is known in the literature as Ro, and is a function of time and temperature and is expressed as

$$Ro = texp[(T-100)/14.75]$$

with temperature, T expressed in Celsius and time, t, expressed in minutes.

The formula is also expressed as Log(Ro), namely

$$Log(Ro) = Ln(t) + [(T-100)/14.75].$$

Log(Ro) is preferably in the ranges of 2.8 to 5.3, 3 to 5.3, 3 to 5.0 and 3 to 4.3.

The steam exploded stream may be optionally washed at least with water and there may be other additives used as well. It is conceivable that another liquid may be used in the future, so water is not believed to be absolutely essential. At this point, water is the preferred liquid. The liquid effluent from the optional wash may be added to the soaked liquid stream. This wash step is not considered essential and is optional.

The washed exploded stream is then processed to remove at least a portion of the liquid in the washed exploded material. This separation step is also optional. The term at least a portion is removed, is to remind one that while removal of as much liquid as possible is desirable (preferably by pressing), it is unlikely that 100% removal is possible. In any event, 100% removal of the water is not desirable since water is needed for the subsequent hydrolysis reaction. The preferred process for this step is again a press, but other known techniques and those not invented yet are believed to be suitable. The liquid products separated from this process may be added to the soaked liquid stream.

One aspect of the invention involves exposing the ligno-cellulosic biomass to a presoaking step before a soaking step in a temperature range of between 10°C and 150°C, 25°C to 150°C even more preferable, with 25°C to 145°C even more preferable, and 25°C to 100°C and 25°C to 90°C also being preferred ranges.

The pre-soaking time could be lengthy, such as up to but preferably less than 48 hours, or less than 24 hours, or less than 16 hours, or less than 12 hours, or less than 9 hours or less than 6 hours; the time of exposure is preferably quite short, ranging from 1 minute to 6 hours, from 1 minute to 4 hours, from 1 minute to 3 hours, from 1 minute to 2.5 hours, more preferably 5 minutes to 1.5 hours, 5 minutes to 1 hour, 15 minutes to 1 hour.

The pre-soaking step is done in the presence of a liquid which is the pre-soaked liquid. After soaking, this liquid preferably has removed less than 5% by weight of the total sugars in the raw material, more preferably, less than 2.5% by weight of the total sugars in the raw material being more preferable, with less than 1% by weight of the total sugars in the raw material, being the most preferred.

This pre-soaking step is useful as a modification to the soaking step of a biomass pre-treatment step. In soaking (not pre-soaking) of the biomass pre-treatment steps, the soaked liquid stream which has been separated from the soaked solids will preferably have reduced filter plugging components so that the soaked liquid can be easily purified, preferably by means of at least one technique selected from the group of chromatography, nanofiltration and ultrafiltration. The soaked liquid stream may be subjected to more than one purification step, which may be done before hydrolysis or decationization.

The soaked liquid stream will comprise water, sugars which includes monomeric sugars and oligomeric sugars, salts which are dissociated into anions and cations in the soaked liquid stream, optionally phenols, furfural, oils and acetic acid. The soaked liquid stream will in particular contain C5 oligomers, such as xylooligomers.

Ideally, the concentration of the total sugars in the soaked liquid stream should be in the range of 0.1 to 300 g/l, with 50 to 290 g/l being most preferred, and 75 to 280 g/l even more preferred, with 100 to 250 g/l most preferred. This concentration can be done by the removal of water. A 50% removal of water increases the concentration of the non-water species by two. While various concentration increases are acceptable, in one embodiment, at least a two fold increase in the concentration of the xylooligomers in the soaked liquid stream is reached. In one embodiment, at least a fourfold increase in the concentration of the xylooligomers in the soaked liquid stream is reached. In one embodiment, at least a six fold increase in the concentration of the xylooligomers in the soaked liquid stream is reached.

In a preferred embodiment, the soaked liquid stream is subjected to hydrolysis for converting at least a portion of the oligomers in the soaked liquid stream to monomers. Hydrolysis of oligomers may be obtained by contacting the soaked liquid stream with a hydrolysis catalyst at hydrolysis conditions. The hydrolysis catalyst may be an inorganic acid, such as sulfuric acid, or an enzyme or enzyme cocktail. The hydrolysis conditions will vary according to the selected hydrolysis catalyst, and are well known in the art.

A preferred way to conduct the hydrolysis of the soaked liquid stream comprises two steps. The first step is to create an acidic stream from the soaked liquid stream. This is accomplished by increasing the amount of H+ ions to the soaked liquid stream to create the acidic stream. After the desired pH is obtained, the next step is hydrolyzing the oligosaccharides in the acidic stream by raising the temperature of the acidic stream to a hydrolysis temperature for the hydrolysis reaction to occur creating a hydrolyzed stream.

While the creation of the acidic stream can be done in any manner which increases the concentration of H+ ions, a preferred embodiment is to take advantage of the salt content of the soaked liquid stream. In order to obtain the required acidity for the hydrolysis step, the content of salts in the soaked liquid stream can be reduced via cation exchange while at the same time replacing the cations with H+ ions. While the salts may naturally occur in the soaked liquid stream, they can also be added as part of the pre-treatment processes or prior to or during the creation of the acidic stream.

In one embodiment, the acidic stream can also be concentrated. While various concentration increases are acceptable, in one embodiment, at least a two fold increase in the concentration of the xylooligomers in the acidic stream is reached. In one embodiment, at least a fourfold increase in the concentration of the xylooligomers in the acidic stream is reached. In one embodiment, at least a six fold increase in the concentration of the xylooligomers in the acidic stream is reached.

The process of reducing the amount of cations of the salts, called decationization, removes the cations by exchanging them with H+ ions. One way the cations in the soaked liquid stream can be replaced by H+ ions is by using an ion exchange agent, such as an ion exchange resin. The cations can also be exchanged using a membrane. For example, Dupont's Nafion® PFSA Resins can be used as resins in an exchange column or as a membrane through which the soaked liquid stream is passed. These are perfluorinated resins in the sulfonyl fluoride (-SO$_2$F) form.

If a decationizing resin (ion exchange resin) or ion exchange membrane is used, an additional step may be needed for separating at least a portion of the acidic stream from the ion exchange media before subjecting the separated portion to the hydrolysis reaction and temperatures. Preferably, all the ion exchange media is removed from the acidic stream before hydrolyzing the oligosaccharides in the acidic stream.

While the concentration of the natural occurring salts is not so critical, it should be recognized that the amount of salts present influences the amount of H+ ions that can be increased (added to the liquid biomass solution) via ion exchange. The amount of H+ ions also determines the pH of the acidic stream. These salts can be concentrated according to the steps outlined above.

Should the soaked liquid stream not have sufficient salts with cations, one can add a salt or cations in another manner to the soaked liquid stream prior to the creation of the acidic stream, which includes prior to and/or during decationization, and/or after decationization, or combination thereof. Preferably, the salts of Magnesium, Calcium, Sodium, Potassium can be used. Preferably, salts with a monovalent cation are used as the cation will not damage the ion exchange media as much as a bivalent ion. The ion associated with the added salt should be selected so as to benefit, or at least not create problems later in the process or in subsequent process. For example, calcium carbonate is preferred over magnesium sulfate as the sulfur is known to cause problems in later processing.

Should one not want to remove the cations or only remove a small amount of the cations, one may add additional H+ ions to the soaked liquid stream. The amount of H+ ions can be increased via any known means, including the use of acids, electrical current, the addition of hydrogen peroxide, and the use of a membrane; or even in-situ production of the H+ ions. Of course, the practitioner would not use the ion exchange process if one wanted to increase the amount of H+ ions without removing cations. The addition of a small amount of acid may occur at various points in the described process.

Increasing the amount of H+ ions, or protons, in-situ can be accomplished by adding a compound which does not contain H+ ions capable of disassociating in water, but rather catalyzes a reaction, or the compound itself reacts, with component(s) already present in the soaked liquid stream. For example, AlCl$_3$ contains no H+ ions. However, when added to the soaked liquid stream, the AlCl$_3$ will react with the water in the soaked liquid stream to form Al(OH)$_3$ and HCl, thus creating the H+ ion. In this manner, the amount of the H+ ions are increased without adding H+ ions to the soaked liquid stream.

In the case of decationization, the pH of the decationized, acidic stream becomes lower than the pH of the soaked liquid stream. The pH that can be achieved with decationization depends on the initial cation concentration in the soaked liquid stream, the cations added to the stream, the ion resin exchange capacity, specific velocity through the resin and temperature of exposure.

In one embodiment, the decationization occurs at a temperature in the range of 5 °C to 60 °C, for a time sufficient to lower the pH of the liquid biomass solution at least 0.5 units, with 1.0 units being more preferable, and 1.25 being most preferable.

In one embodiment, for a suitable hydrolysis reaction, an acidic stream pH below at least 3.0 is desired. Therefore, in various embodiments, the pH of the acidic stream is selected from the following ranges: less than 3.0; less than 2.5; less than 2.0; less than 1.5; less than 1.39; less than 1.2; and less than 1.0. One of ordinary skill knows that pH has a lower theoretical limit of up to but not including 0, thus each of the above numbers can be expressed as the upper limit of the pH of the acidic stream, with the pH being greater than, but not including, 0.0.

Once the desired pH is reached, the acidic stream is hydrolyzed by increasing the temperature of the acidic stream to a hydrolysis temperature greater than 80 °C, and in one embodiment, within the range of 80 °C to 200°C. In various embodiments, suitable hydrolysis temperature ranges are selected from the group consisting of 80 °C to 180 °C; 100 °C to 180 °C; 95 °C to 180 °C; 120 °C to 180 °C; and 120 °C to 170 °C. The hydrolysis temperature is maintained for a time sufficient to hydrolyze the components (oligosaccharides) to the degree desired. In one embodiment, the time for hydrolysis can be as little as less than 1 second. In various embodiments, it is possible to obtain hydrolysis yields close to 95%, without addition of any acid into the stream, and significantly reducing degradation products.

The phrase acid means homogeneous acid which is a compound that disassociates in water to become at least partially soluble and in so doing donates at least one proton [H+]. While some acid may be added to the process, the amount of acid added should be such that the amount of the H+ ions derived from the acid or acids in combination should be less than 90 % of the total amount of H+ ions added to the process, regardless of addition location. In addition to disassociating with water, the acid will react with a base to form a salt. While having less than 90% of the total amount of H+ ions added to the process be derived from an acid or acids is preferred, less than 80% is even more preferred, less than 70% is even more preferred, with less than 25% being another preferred level, with less than 10% being another preferred level, with no amount of H+ ions added to the process being derived from an acid or acids the most preferred; regardless of addition location. In one embodiment, the percentage of the total amount of H+ ions added to the acidic stream derived from an acid or acids is selected from the group consisting of less than 80%, less than 70%, less than 60%, less than 50%, less than 40%, less than 30%, less than 20%, less than 10%, and substantially 0%.

One way to achieve these levels is to add the H+ ions at least in part, if not all, from the group selected from decationization and in situ generation. It has been observed that the lower the pH of the acidic stream, the lower the temperature and time needed for hydrolysis. Because pH is a logarithmic measure, the relationship of lower pH is not believed to be linear with the reduced temperature and time.

In this way, the use of traditionally large amounts of acid or acids used in the hydrolysis step is avoided, allowing the passage from a rather harsh treatment to a totally mild one and the consumption of acid used can be reduced to the amount needed to regenerate the cationic resin (or not used at all). The acid is then recovered in a separate stream and then more easily disposed of.

In one embodiment, the final hydrolyzed stream is a cleaner liquid, containing almost exclusively monomeric sugars, low content of salts and low amount of degradation products that could hinder subsequent chemical or biological transformations of the sugars. In another preferred embodiment, the sugars in the liquid sugar stream comprise mainly xylose and the preferred amount of xylose in the liquid sugar stream on a dry basis is greater than 50%, more preferably greater than 70%, even more preferably greater than 80%, yet even more preferably greater than 90%, being greater than 95% the most preferred value.

In a preferred embodiment, the liquid C5-rich sugar stream comprises at least a portion of the final hydrolyzed stream.

**Catalytic conversion of C5-rich liquid stream**

The plurality of diols is obtained from the liquid C5-rich sugar stream preferably by means of a catalytic conversion process, wherein the liquid C5-rich sugar stream is first converted to a polyols mixture. Preferably the catalytic conversion process comprises two steps, namely a hydrogenating step and a hydrogenolysis step, both steps being conducted in the presence of hydrogen. The two steps may be conducted in a single reactor, or more preferably in two separated reactors.

The liquid sugar stream is contacted with a hydrogenating catalyst and hydrogen at hydrogenating conditions promoting the hydrogenation of the sugars in the liquid sugar stream. The hydrogenating catalyst is preferably a supported metal selected from the group of Ru, Ni and Pt, or combination thereof. The catalyst support may be alumina, zirconia or activated carbon, or a combination thereof. The ratio between the total amount of the sugars in the liquid sugars stream to the amount of catalyst is preferably between and 3:0.5.

The hydrogenating reaction is conducted at a hydrogenating temperature promoting the conversion of all, or substantially all, the sugars in the liquid sugar stream. The hydrogenating temperature is between 50°C to 200°C, preferably between 70°C to 150°C, more preferably between 85°C to 130°C, and most preferably between 100 to 120°C.

The hydrogenating reaction is conducted in the presence of hydrogen of a hydrogen, at a hydrogenation pressure in the range of 30 bar to 150 bar, preferably in the range of 40 bar to 150 bar, more preferably in the range of 50 bar to 100 bar, most preferably in the range of 60 bar to 80 bar. The hydrogenation pressure corresponds to the pressure of the hydrogen at the temperature of 25°C, that is before the hydrogen is introduced in the reactor used for conducting the hydrogenating reaction. The actual reaction pressure in the reactor may be different from the defined hydrogenation pressure due to the temperature effect and to contributions of the vapor pressure of the water in the liquid sugar stream and reaction products at the hydrogenating temperature.

Preferably, the hydrogen and the liquid sugar stream are introduced in the hydrogenation reactor in suitable amounts to reach a molar ratio of the total amount of solubilized monomeric sugar to the hydrogen amount in a range of 1:2 to 1:10, more preferably of 1:3 to 1:8, and most preferably of 1:4: to 1:6. Because the reaction preferably occurs in an stoichiometric excess of Hydrogen for effectively promoting the hydrogenation reaction, a portion of the hydrogen will not react and may be recycled at the end of the reaction and reused in the whole conversion process.

As the liquid C5-rich sugar stream comprises mainly xylose, glucose and arabinose, or a mixture thereof, the hydrogenation reaction of the sugars produces an hydrogenated mixture comprising at least a sugar alcohol. Preferred sugar alcohols are xylitol, sorbitol and arabitol, or mixture thereof.

The hydrogenated mixture preferably will comprise mainly xylitol, being the preferred amount of xylitol in the hydrogenated mixture on a dry basis greater than 45%, more preferably greater than 70%, even more preferably greater than 80%, yet even more preferably greater than 90%, being greater than 95% the most preferred value.

The hydrogenation reaction may be conducted in a batch mode and for a hydrogenation time sufficient for converting all, or substantially all, the sugars in the liquid sugar stream. The hydrogenation time is preferably between 30 minutes to 240 minutes, more preferably between 45 minutes to 180 minutes, even more preferably between 60 minutes to 120 minutes. The catalyst is preferably present in particle form and dispersed in the liquid sugar stream to effectively promoting the hydrogenation reaction. The content of the hydrogenation reactor may be stirred during the reaction.

In another embodiment, the hydrogenation reaction is conducted in a continuous or semi-continuous mode, wherein the liquid sugar stream is inserted in the hydrogenation reactor and/or the hydrogenated mixture is removed from the reactor continuously or semi-continuously. The continuous or semi-continuous hydrogenation reaction may be characterized by a hydrogenation liquid hourly space velocity of 0.2 to 3 $h^{-1}$, preferably of 0.5 to 2.5 $h^{-1}$, most preferably of 1 to 2 $h^{-1}$. The continuous or semi-continuous hydrogenation reaction may be conducted in a CSTR reactor, the catalyst being preferably present in particle form and dispersed in the liquid sugar stream in the presence of mechanical agitation. A preferred continuous or semi-continuous hydrogenation configuration the fixed bed reactor, even if the hydrogenation reaction may be conducted also in a fluidized bed reactor. The liquid sugar stream, the hydrogenation catalyst and the hydrogen may be introduced in the hydrogenation reactor separately from different inlets or may be premixed before the insertion in the reactor.

The hydrogenated mixture is then removed from the hydrogenation reactor and inserted in the hydrogenolysis reactor. If the hydrogenation catalyst is present in dispersed particle form, it is at least in part removed from the reactor together with the hydrogenated mixture, and it may be recovered for instance by means of filtration and reinserted in the hydrogenation reactor, eventually after being regenerated. Eventually, also unwanted hydrogenation products may be removed from the hydrogenated mixture.

The hydrogenated mixture is inserted in a hydrogenolysis reactor and contacted with a hydrogenolysis catalyst and hydrogen at hydrogenolysis conditions promoting the hydrogenolysis of the sugar alcohols in the hydrogenated mixture. The hydrogenolysis catalyst is preferably a supported metal selected from the group of Ru, Ni and Pt, or combination thereof. The catalyst support may be alumina, zirconia or activated carbon, or a combination thereof. The ratio between the total amount of the sugars in the liquid sugars stream to the amount of catalyst is preferably between 3:2 and 3:0.1.

The hydrogenolysis reaction of the sugar alcohols occurs in the presence of OH$^-$ ions which affects the pH of the reaction environment. pH values greater than 9, corresponding to basic conditions, promote the effective hydrogenolysis of the sugar alcohols. OH$^-$ ions are preferably derived from a compound selected from the group consisting of NaOH, KOH, $Ca(OH)_2$ and $Ba(OH)_2$, or a combination thereof. The source of OH$^-$ ions may be introduced in the hydrogenolysis reactor or it may be added to the hydrogenated mixture before the insertion in the reactor. Preferably, the hydrogenolysis reaction is conducted controlling the ratio of the amount of the sugar alcohols to the amount of OH$^-$ ions introduced in the hydrogenolysis reactor rather than controlling the pH of the reaction environment. The molar ratio of the total amount of sugar alcohols introduced in the reactor to the amount OH$^-$ ions introduced in the reactor may be in the range of 1:0.5 to 1:10, more preferably of 1:2 to 1:8 and most preferably of 1:3 to 1:6.

The hydrogenolysis reaction is conducted at a hydrogenolysis temperature promoting the conversion of the alcohols in the hydrogenated mixture. The hydrogenating temperature may be between 150°C to 240°C, and most preferably between 190 to 220°C.

The hydrogenolysis reaction is conducted in the presence of hydrogen of a hydrogen, at a hydrogenolysis pressure in the range of 40 bar to 170 bar, preferably in the range of 40 bar to 150 bar, more preferably in the range of 50 bar to 100 bar, most preferably in the range of 60 bar to 80 bar. The hydrogenolysis pressure corresponds to the pressure of the hydrogen at the temperature of 25°C, that is before the hydrogen is inserted in the reactor. The actual reaction pressure in the reactor may be different from the defined hydrogenolysis pressure due to the temperature effect and to contributions of the vapor pressure of the water in the hydrogenated alcohols and reaction products at the hydrogenolysis temperature.

Preferably, the hydrogen and the liquid sugar stream are introduced in the hydrogenolysis reactor in suitable amounts to have a molar ratio of the total amount of solubilized monomeric sugar to the hydrogen amount in a range of 1:2 to 1:10, more preferably of 1:3 to 1:8, and most preferably of 1:4: to 1:6. Because the reaction preferably occurs in a stoichiometric excess of Hydrogen for effectively promoting the hydrogenolysis reaction, a portion of the hydrogen will not react and may be recycled at the end of the reaction and reused in the whole conversion process.

The hydrogenolysis reaction of the sugar alcohols in the hydrogenated mixture produces a polyols mixture comprising water ethylene glycol, 1,2-propylene glycol and glycerol. It may further comprise other polyols, unwanted compounds, comprising lactic acid or formic acid, and unreacted sugar alcohols.

The hydrogenolysis reaction may be conducted in a batch mode and for a hydrogenolysis time sufficient for converting all, or substantially all, the sugars in the liquid sugar stream. The hydrogenolysis time is preferably between 10 minutes to 10 hours, more preferably between 20 minutes to 8 hours, even more preferably between 30 minutes to 7 hours, yet even more preferably between 45 minutes to 6 hours, most preferably between 60 minutes to 4 hours, and even most preferably between 90 minutes to 3 hours. The catalyst is preferably present in particle form and dispersed in the hydrogenated mixture to effectively promoting the hydrogenolysis reaction. The content of the hydrogenolysis reactor may be stirred during the reaction.

In another embodiment, the hydrogenolysis reaction is conducted in a continuous or semi-continuous mode, wherein the hydrogenated mixture is inserted in the hydrogenation reactor and/or the polyols mixture is removed from the reactor continuously or semi-continuously. The continuous or semi-continuous hydrogenolysis reaction may be characterized by a hydrogenolysis liquid hourly space velocity of 0.1 to 4 $h^{-1}$, preferably of 0.2 to 3 $h^{-1}$, more preferably of 0.5 to 2.5 $h^{-1}$ and most preferably of 1 to 2 $h^{-1}$. The continuous or semi-continuous hydrogenolysis reaction may be conducted in a CSTR reactor, the catalyst being preferably present in particle form and dispersed in the hydrogenated mixture in the presence of mechanical agitation. A preferred continuous or semi-continuous hydrogenolysis configuration the fixed bed reactor, even if the hydrogenolysis reaction may be conducted also in a fluidized bed reactor. The hydrogenated mixture, the hydrogenolysis catalyst and the hydrogen may be introduced in the hydrogenolysis reactor separately from different inlets or may be premixed before the insertion in the reactor.

In a preferred embodiment, after the hydrogenolysis step the polyols mixture is removed from the hydrogenolysis reactor together with unreacted hydrogen and hydrogenolysis gas products and the subjected to a gas/liquid separation step, preferably at a temperature lower than the hydrogenolysis temperature, more preferably at temperature lower than 100°C, most preferably at a temperature lower than 50°C. The unreacted hydrogen and hydrogenolysis gas products may be sent to a first Hydrogen separation step, where hydrogen is purified and then recycled in the hydrogenation and/or hydrogenolysis reaction.

If the hydrogenolysis catalyst is present in dispersed particle form, it may be at least in part removed from the reactor together with the polyols mixture, and it may be recovered for instance by means of filtration and reinserted in the hydrogenolysis reactor, eventually after being regenerated.

A portion of the water of the polyols mixture may be removed by means of a dewatering step. Dewatering may be done by thermal evaporation or by filtration. Preferably, the dry matter content of the dewatered polyols mixture is in the range of 40% to 95%, more preferably in the range of 50 to 90% even more preferably in the range of 60% to 85%, and most preferably in the range of 70% to 80%. A small amount of polyols, and alcohols eventually present, both ones having a boiling point similar to the boiling point of water, may be present in the evaporated water stream, even if the evaporation is preferably conducted at condition to minimize the loss of polyols.

The plurality of diols of the disclosed composition is then removed, or separated, from the polyols mixture, which has been eventually dewatered. Even if any methods known in the art and still to be invented may be used, a preferred method for obtaining the separated plurality of diols comprises a combination of evaporation and distillation steps. According to a preferred embodiment, the polyols mixture is first separated by thermal evaporation in a low boiling polyols mixture comprising water, ethylene glycol and 1,2-propylene glycol, and a high boiling polyols mixture, comprising water, glycerol and eventually lactic acid and unreacted sugar alcohols. Preferably, the evaporation is conducted at 120°C and at a pressure of 50mbar.

As the low boiling polyols mixture comprises a high percent molar amount of 1,2-propylene glycol, preferably from 30% to 70%, more preferably from 40% to 60%, and most preferably from 45% to 55%, it is preferably subjected to one or more distillation steps, conducted at suitable conditions to separate a first stream comprising a portion of the 1,2-propylene glycol and eventually other not 1,2-diols, such as 1,4-Butanediol, and a second stream comprising the plurality of diols of the disclosed composition from the low boiling polyols mixture. A skilled artisan may easily determine the suitable conditions on the basis of standard distillation techniques and the boiling temperature of the polyols in the low boiling polyols mixture. In a preferred embodiment, only one distillation step is used to produce the plurality of diols of the disclosed composition, so as to reduce investment and operation costs. A second distillation step of the second stream comprising the plurality of diols coming from the first distillation step may be added in the case that a plurality of diols having a greater molar amount of ethylene glycol in the plurality of diols is required.

**Use of the composition including Polyester resins and Bottles**

The disclosed composition comprising a plurality of diols is used to produce a polyester resin. A first preferred method to produce the polyester resin is the ester process, comprising an ester interchange and a polycondensation. Basically, the diols of the plurality of diols, which may include or be completely comprised of bio-based diols are reacted with a dicarboxylic ester (such as dimethyl terephthalate) in an ester interchange reaction, which may be catalyzed by an ester interchange catalyst. As an alcohol is formed in the reaction (methanol when dimethyl terephthalate is employed), it may be necessary to remove the alcohol to convert all or almost all of the reagents into monomers. Then monomers undergo polycondensation and the catalyst employed in this reaction is generally an antimony, germanium or titanium compound, or a mixture thereof. The ester interchange catalyst may be sequestered to prevent yellowness from occurring in the polymer by introducing a phosphorus compound, for example polyphosphoric acid, at the end of the ester interchange reaction.

A second preferred method to produce the polyester resin is the acid process, comprising a direct esterification and a polycondensation. Basically, the diols of the plurality of diols are reacted with an acid (such as terephthalic acid) by a direct esterification reaction producing monomer and water, which is removed to drive the reaction to completion. The direct esterification step does not require a catalyst. Similarly to the ester process, the monomers then undergo polycondensation to form polyester.

In both method, the polyester may be further polymerized to a higher molecular weight by a solid state polymerization, which is particularly useful for container (bottle) application.

In a preferred embodiment, at least 85% of the acid moieties of the polyester are derived from terephthalic acid or its dimethyl ester.

As known in the art, a color toner, such as for instance a blue toner, may be added in the process for producing the polyester resin or preform to produce a preform and a bottle of desired color and other optical properties. This toner often is provided as a mixture of toning agents. It is generally added at the ppm level of the composition to which it is added. In polyesters it can be added during the polyester manufacture or the preform manufacture. At the highest level it is added so that it is mixed into the polyester and dispersed in the polyesters liquid or molten state.

One such toner package used in the experiments for this specification consisted of Amaplast Blue HB (Colour Index Solvent Blue 138, CAS Number 403668-77-9) and Amaplast Violet PK (Colour Index Sovlent Violet 50, CAS Number 403668-75-8) in a weight ratio of 0.93 parts Blue HB to 0.67 parts Blue 138.

The typical amount of this mixture used in polyesters in making preforms is 2 ppm of the mixture to the total weight of the preform. As the it is well known to vary the amount of the toner or toner package, a blue color or less yellow can be obtained by adding more toner.

Not all polyesters can have the yellow toned out.

Thereby, the polyester preform may be characterized by having any desirable b* blueness value, preferably in a range from -7 to +6, more preferably from -5 to +5, even more preferably from -4 to +4, even yet more preferably from -3 to +3, and most preferably from -2 to +2.

The polyester preform may be further characterized by having a L* brightness which is in a range from 35 to 65, from 40 to 60, preferably from 45 to 60 and more preferably from 50 to 60.

The polyester bottle derived from the polyester preform may be characterized by having a b* blueness which is in a range from -7 to +6, preferably from -5 to +5, more preferably from -4 to +4, even more preferably from -3 to +3, and most preferably from -2 to +2.

The polyester bottle may be characterized by having a L* brightness which is in a range from 35 to 65, preferably from 40 to 60, more preferably from 45 to 60 and most preferably from 50 to 60.

The polyester bottle may be characterized by having a hunter transmission haze which is less than a value selected from the group consisting of 5% per mil.

The polyester bottle may be further characterized by having a sidewall crystallinity which is a percent value in a range selected from the group consisting of from 20 to 35, from 20 to 30, and from 22 to 28.

**Experimental**

Example 1 - Preparation of C5-rich liquid sugar stream

A wheat straw feedstock was used as starting ligno-cellulosic feedstock to obtain the C5-rich liquid sugar stream used for producing the disclosed plurality of diols.

The feedstock was subjected to a pre-soaking step in water at a temperature of 130°C for 30 minutes at a liquid-solid ratio of 5:1.

Presoaked ligno-cellulosic feedstock was subjected to a soaking step at a temperature of 155°C for 65 minutes and the soaked feedstock was separated by means of a press to produce a soaking liquid and a soaked solid stream containing the soaked biomass. The soaked solid stream was subjected to steam explosion at a temperature of 190°C for 4 minutes to create a steam exploded stream. Liquids were separated from the steam exploded stream by means of a press and added to the soaking liquid.

The soaking liquid was subjected to a solid separation step to remove solids, by means of centrifugation and macro filtration (bag filter with filter size of 1 micron). Centrifugation was performed by means of a Alfa Laval CLARA 80 centrifuge at 8000rpm. A clarified liquid was separated from suspended solids.

The clarified liquid was then subjected to a first nano-filtration step by means of a Alfa Laval 3.8" equipment (membrane code NF3838/48), which splits the input stream into two streams, the retentate and the permeate. Nano-filtration was performed according to the following procedure.

Permeate flow stability was checked by means of flushing with de-mineral water, at the temperature of 50°C and 10 bar. Flow rate of the permeate was measured. An amount of 1800 liter of clarified liquid were inserted in the feed tank. Before filtration, the system was flushed for 5 minutes, without pressure, in order to remove the water. The system was set at the operating conditions (pressure: 20 bar, temperature: 45 °C). Retentate stream was recycled in the feed tank and permeate stream was dumped. The test was run until the volume of liquid in the feed tank was reduced up to 50% of the initial soaked liquid volume, corresponding to 900 liters of permeate and 900 liters of retentate. The previous procedure produced a first nano-filtered retentate or a first nano-filtered permeate.

The first retentate liquid was diluted by adding a volume of water corresponding to 50% of its volume and subjected to a second first nano-filtration step, according to the same procedure used in the first nano-filtration step.

The second nano-filtration produced a second nano-filtered permeate and a purified liquid stream.

The purified liquid stream was subjected to a decationization step to produce a decationized liquid stream having a reduced amount of salts, by inserting the purified liquid stream in a column containing an ionic exchange resin (Relite EXC14) at a flow rate of 240 l/h and at the temperature of 25°C. Decationization was performed at a contact time of 3.5 BVH (Bed Volume per Hour).

The decationized liquid stream, having a pH of 1.34, was subjected to hydrolysis in a continuous reactor at 146°C for 4.3 minutes, at a flow rate of 40 KG/h.

The hydrolyzed liquid stream was subjected to a purification step by means of chromatography to produce the C5-rich liquid sugar stream. The hydrolyzed liquid stream was inserted in a chromatographic column containing a resin (DIAION UBK 530) at a temperature of 50°C, a flow rate of 60l/h and a contact time of 0.5BVH. The composition of the C5-rich sugar stream is reported in Table 1.

Example 2. Conversion of the C5-rich sugar stream to a polyols mixture.

The C5-rich liquid sugar stream was converted to a polyols mixture in a two-step catalytic reaction, both steps being conducted in the presence of hydrogen.

The C5-rich liquid sugar stream was inserted in a hydrogenation reactor and contacted with a hydrogenating catalyst (2%Ru/C catalyst Johnson Matthey Extrudate type 642) and hydrogen at a pressure of 80bar, at reaction temperature of 110°C.

The hydrogenation reaction was conducted in a continuous mode, wherein the C5-rich liquid sugar stream was inserted in the hydrogenation reactor continuously at a flow rate of 6l/h and the hydrogenated mixture was removed from the reactor continuously. Liquid hourly space velocity (LHSV) was about 1.3 $h^{-1}$, and Hydrogen flow was set at a value corresponding to 3mol/mol of $H_2$/total sugars ratio.

In table 1 the composition of the C5-rich liquid sugar stream and hydrogenated mixture are reported. It is noted that the amount of glucose in the C5-rich liquid sugar stream is very limited and that the hydrogenation conversion of the sugars is almost complete.

Table 1. Composition of C5-rich liquid sugar stream and hydrogenated mixture.

|  | C5-rich liquid sugar stream composition (g/l) | Hydrogenated mixture (g/l) |
|---|---|---|
| Glucose | 3.16 | n.d. |
| Arabinose | 1.57 | n.d. |
| Xylose | 48.8 | n.d. |
| Sorbitol | n.d. | 2.04 |
| Arabitol | n.d. | 4.16 |
| Xylitol | n.d. | 40.6 |

The hydrogenated mixture was inserted into a hydrogenolysis reactor and contacted with a hydrogenolysis nickel-based catalyst and hydrogen at hydrogenolysis conditions corresponding to a Hydrogen pressure of 80bar at a temperature of 200°C. Liquid hourly space velocity (LHSV) was about 1.5 h$^{-1}$, and Hydrogen flow was set at a value corresponding to 4mol/mol of $H_2$/total sugar alcohols ratio.

A 5% solution of soda was added to the hydrogenated mixture at a rate corresponding to 10mol/mol of H2/sugar alcohols ratio, to supply the amount of OH- ions necessary to promote the hydrogenolysis reaction.

The hydrogenolysis reaction was conducted in a continuous mode, wherein the hydrogenated mixture was inserted in the hydrogenation reactor at a flow rate of 6l/h and the polyols mixture was removed from the reactor continuously. The polyols mixture was then removed from the hydrogenolysis reactor.

The composition of the polyols mixture on a dry basis is reported in table 2. The dry matter content was 10%. It is noted that the hydrogenolysis reaction of the sugar alcohols in the hydrogenated mixture produced a polyols mixture comprising mainly ethylene glycol, 1,2-propylene glycol and glycerol and other diols. It may further comprise unwanted compounds, such as acetic acid, lactic acid, formic acid, and unreacted sugar alcohols.

Table 2. Composition of the polyols mixture

| Component | Weight% |
|---|---|
| Xylose | 0.5 |
| Sorbitol | 0.9 |
| Arabitol | 8.9 |
| Xylitol | 16.7 |
| Glycolaldehyde | 2.7 |
| Lactic acid | 7.0 |
| Formic acid | 1.5 |
| Acetic acid | 2.2 |
| Ethylene glycol | 19.4 |
| 1,2-Propylene glycol | 20.4 |
| 2,3-Butanediol | 1.7 |
| 1,4-Butanediol | 1.0 |
| Glycerol | 12.0 |
| 1,2-Butanediol | 5.1 |
| 1,2-Pentanediol | Traces |
| 1,4-Pentanediol | Traces |

Example 3- Water and Heavy polyols removal

The polyols mixture was inserted in a 40 liter glass jacketed turbine-stirred vacuum batch flash distillation system. The polyols mixture (water content 90%) was heated gradually up to 55 °C at a pressure of 64mbar. Under these conditions, a distillate fraction (water content 99.7%) was collected. Subsequently, the liquid temperature was heated up gradually up to 66°C and when the condensate flow was observed being reduced, another distillate fraction was extracted (water content 99.5%) until the distillate flow became negligible. Water content of the residue at the bottom was reduced to 11.3%, and residue composition on dry basis was substantially the one reported in table 2.

The dewatered polyols mixture was subjected to an evaporation step for separating a mixture comprising low boiling polyols and a mixture comprising high boiling polyols.

The dewatered polyols mixture was heated gradually up to 120°C at a pressure of 1mbar. Under these conditions, a low boiling polyols distillate fraction corresponding to 53% by weight of the dewatered polyols mixture was collected, comprising mainly ethylene glycol, 1,2- Propylene glycol and minor amount of other diols. The composition on dry basis is in table 3:

Table 3. Composition of low boiling polyols mixture

| Component | GC Area % |
|---|---|
| 2,3-Butanediol | 1.21 |
| 1,2-Propylene glycol | 48.47 |
| Ethylene glycol | 44.58 |
| 1,2-Butanediol | 3.54 |
| 1,2-Pentanediol | 0.34 |
| 1,4-Pentanediol | 0.84 |
| 1,4-Butanediol | 1.02 |

Example 4 - Preparation of the compositions comprising ethylene glycol and 1,2-diols

Two different bio-based compositions comprising ethylene glycol and 1,2-diols were produced by distilling the low boiling polyols mixture.

The first distillation was performed in a 75 liter cylindric-shaped (height = 60cm, diameter = 40cm) tape-heated pot vacuum batch distillation system (column height = 2m, column diameter = 0.1m, estimated theoretical plates = 20, column packing type = Sultzer CY). The low boiling polyols mixture was gradually heated up to 96°C at a pressure oscillating between 8 and 10mbar. Under these conditions, ten polyol fractions, each one having approximately the same volume, were collected up to when the distillate flow became negligible. The last distillate fraction corresponded to about 11,4% by weight of the low boiling polyols mixture. The composition of the last fraction obtained from the first distillation is reported in table 4 and is the first bio-based diols composition, indicated as EG-002, used in the following experiments.

Table 4. Composition of the first bio-based diols composition

| Component | GC Area % |
|---|---|
| 1,2-Propylene glycol | 5,04 |
| Ethylene glycol | 85,57 |
| 1,2-Butanediol | 7,99 |
| 1,2-Pentanediol | 0,84 |
| Others | 0,55 |

The composition of the residue of the first distillation is shown in table 5. The residue was removed from the bottom of the first distillation equipment and subjected to a second distillation in a second apparatus.

Table 5. Composition of the residue of the first distillation

| Component | GC Area % |
|---|---|
| 1,2-Propylene glycol | 0,05 |
| Ethylene glycol | 82,81 |

(continued)

| Component | GC Area % |
|---|---|
| 1,2-Butanediol | 0,32 |
| 1,2-Pentanediol | 1,33 |
| 1,4-Pentanediol | 3,97 |
| 1,4-Butanediol | 4,94 |

The equipment used in the second distillation was of a 2 liter stirred mantle-heated pot vacuum batch distillation system made up of two cylindrical sections linked one to the other (single section height = 50cm, single section diameter = 5cm, estimated overall theoretical plates = 10, column packing type = Vicotex). The residue of the first distillation was heated up gradually from 120 to 185°C at a pressure lower than 2mbar. Seven distillate fractions were collected, totally corresponding to 93,7% by weight of the starting mixture, having an ethylene glycol content by weight greater than 97,9%.

The remnant part of the distillate fractions comprises 1,2 diols and also small amount of 1,2-cyclic diols with 5 to 7 Carbon atoms, which were not detected in the other mixtures.

The seven distillate fractions were mixed together and used as a second bio-based diols composition (indicated as EG-001) for producing PET resins, preforms and bottles. The total composition is reported in table 6.

Table 6. Composition of the second bio-based diols composition

| Component | GC Area % |
|---|---|
| 1,2-Propylene glycol | 0,10 |
| Ethylene glycol | 98,60 |
| 1,2-Butanediol | 0,39 |
| 1,2-Pentanediol | 0,89 |
| 1,2-Cyclopentanediol | 0,37 |
| 3-Methyl-1,2-Cyclopentanediol | 0,14 |
| 1,2-Cyclohexanediol | 0,08 |

Gas Chromatographic (GC) analyses were carried out using an Agilent 7890 GC, equipped with a Flame Ionization Detector (FID) and Mass Spectrometer Detector (MSD). The analysis was performed by injecting $2\mu L$ of sample on a capillary column type Restek Stabilwax (L=30 m, i.d.=0,32 mm, film thickness= 0,5 $\mu$m). Temperature program of the column oven was as follows: 5 min at 40°C, heating ramp of 8°C/min from 40°C to 130°C, 3°C/min from 130°C to 160°C and 8°C/min from 160°C to 250°C, temperature hold at 250°C for 22,5 min. Temperatures of injector and detectors were as follows: injector 250°C, FID 270°C, MSD 280°C. The amount of the various species is express in GC area% in respect to the total area of the peaks.

Example 5. Optical transmittance Measurements

Optical transmittance in the visible and UV ranges were determined for the plurality of diols in EG-001 and EG-002, respectively and a reference sample of pure petroleum based ethylene glycol sample..

UV-Vis Transmittance was measured using a Perkin Elmer Lambda 35 Spectrometer using the standard 1cm cuvette. The analyses were carried out to measure full spectrum (190 to 1200 nm) transmittance and transmission percentage values at 220, 250, 275 and 350 nm.

The spectra are reported in Figure 1. It is noted that the two compositions have an optimal transmittance in the visible range and a good transmittance in the UV range. The optical properties of the disclosed compositions are overall compatible with PET production for bottle manufacturing. An optical transmittance greater than 100% is usually obtained in these measurements as an effect of internal scattering.

**Polyester resin, preforms and bottles**

The compositions EG-001 and EG-002 were used to produce polyester resins, preforms and bottles. Polyester resins were produced by means of standard ester process using dimethyl terephthalate (DMT) and direct esterification process. Control polyester samples were also produced using standard petrochemical ethylene glycol.

The polyester samples were characterized by means of different standard techniques commonly used in the polyester production for bottles application. Samples produced from composition EG-001 by direct esterification process were fully characterized.

**Intrinsic Viscosity.** The intrinsic viscosity (IV) for polyesters such as PET, in amorphous and solid stated polymers, is calculated from the relative viscosity (RV). The relative viscosity is determined by dissolving the polymer in a mixture of phenol / tetrachloroethane (60/40 by wt.) at 0.5% wt. concentration and using a glass capillary viscometer to measure the polymer solution flow time relative to the pure solvent at 30°C. The IV is calculated from the RV using the Billmeyer equation:

$$IV = [0.25(\eta_r-1) + 3 (\ln \eta r]/C,$$

where

$\eta_r$ = Relative Viscosity, C = Sample Concentration (grams/deciliters), and ln = Natural Logarithm.

**Carboxyl End Groups of Polyester Resins.** The carboxyl end group concentration of a poly (ethylene Terephthalate) resin is determined by dissolution in nitrobenzene at 206°C. The polymer solution is cooled, further diluted with benzyl alcohol and titrated to neutrality with a standardized sodium hydroxide solution to a phenol red endpoint. The carboxyl end group concentration of the poly (ethylene Terephthalate) resin is expressed as equivalents of acid per million grams of polymer.

**Color.** The color of the samples was measured with a Hunter Lab ColorQuest XE. This instrument uses a D65 illuminant and configured with a CIE 2° standard observer. The color of the samples is reported using the CIELAB color scale, where L* is a measure of brightness, a* is a measure of redness (positive a* values) or greenness (negative a* values), and b* is a measure of yellowness (positive b* values) or blueness (negative b* values)

The preform haze is measured on the same instrument and is defined as the percent of the CIE Y diffuse transmittance to CIE Y total transmission. It is generally reported in % Haze and % Haze per mil (0.001 inch).

**Differential Scanning Calorimetry (DSC) Analysis.** The glass transition temperature (Tg), crystallization temperature (Tc), and melting point (Tm) of the PET polymer were determined by DSC. The measurements were made on a TA Instruments Model 2920 DSC under nitrogen. The samples were heated from 30 to 300 °C at 10°C/minute, quenched back to room temperature and re-heated to 300 C at 10°C/minute. Tg, Tc and Tm were measured during the first and second heating cycle. Second heating cycle values are reported.

**½ Time2.** Is the half time of crystallization.

**Percent crystallinity (% cryst).** Percent crystallinity is fraction of the chip which is crystalline. In an amorphous sample the first heating has little or no crystallinity and the second heating will have the crystallinity imparted by the first heating.

**Sidewall crystallinity.** Sidewall crystallinity represents the amount of crystallization in the sidewall which could come from orientatiion or random crystallization. It is measured by using a sidewall sample in the DSC. It can also be determined by density.

Example 6. Polyester resin production by ester process

The compositions EG-001 and EG-002 were used to produce polyesters by means of standard ester process using dimethyl terephthalate (DMT) as the acid moities. A control polyester was also produced using standard petrochemical ethylene glycol.

The polymerization was carried out in a glass reactor equipped with mechanical stirring, distillation column, heated oil bath and N2/vacuum port.

54.6 g of a diol was charged to the reactor with 77.6 g of DMT and 0.0261 g of Mn(Ac)2*4H2O. The temperature of the mixture was raised to 160 C and maintained until the DMT melted and the methanol evolution started. After about 30 minutes the temperature was gradually raised to 190 C and kept at this value for about 140 minutes. At the end of this period the theoretical amount of methanol was collected in the distillation receiver.

0.0129 g of $H_3PO4$ (as a solution in EG at 1% wt. phosphorous) and, 5 minutes later, 0.0193 g of $Sb_2O_3$ (as a solution in EG at 1% wt. antimony) were added to the reaction mixture. The temperature of the mixture was then raised gradually to 265 C and simultaneously the pressure was gradually reduced to 1 mmHg. During this time the major part of the EG molar excess was distilled out.

After full vacuum was reached, the temperature was increased to 275 °C or 285 °C, according to the experiment ("S3 Temperature"), and the mixture polymerized with stirring for about 2 hours ("S3 time"). At the end of this step the reactor was restored to atmospheric pressure with $N_2$ and the polymer recovered. In table 7 reports the characterization of the main properties of the samples. It is noted that the samples produced with the bio-based mixtures of ethylene glycol and 1,2-diols have properties similar to the control sample produced with pure ethylene glycol. The color was measured on 3.175 mm (1/8") Thick Plaque.

Table 7. Comparison of polyester produced by ester process with pure ethylene glycol (DMT-01) and bio-based mixtures of ethylene glycol and 1,2-diols

| Sample ID | Glycol | S3 Temp (°C) | S3 Time (h) | IV | COOH | b* | Tm 2nd |
|---|---|---|---|---|---|---|---|
| DMT-01 | Standard Petro-EG | 275 | 2 | 0,556 | 39 | 4,22 | 255,00 |
| DMT-02 | EG-001 | 275 | 2 | 0,549 | 24 | 3,58 | 256,48 |
| DMT-03 | EG-001 | 285 | 2 | 0,570 | 34 | 6,57 | 257,80 |
| DMT-04 | EG-002 | 275 | 2,5 | 0,470 | 49 | 2,67 | 252,31 |

As can be readily seen, the color of the polyester resin without any toner is suitable to be made into preforms and bottles for commercial use.

EXAMPLE 7. Polyester resin production by direct esterification process

The sample EG-001 was used to produce polyester resin by standard direct esterification. A control sample of was also produced starting from standard petrochemical ethylene glycol.

684 g of ethylene glycol and 0.36 g of lithium acetate were charged to the reactor (oil temperature 180 - 225°C) using a pressurized bomb system and agitated. 1591 g of terephthalic acid (TPA) and 51 g of isophthalic acid (IPA) were charged under nitrogen immediately after the ethylene glycol. The reactor was pressurized with nitrogen to 29 PSI and the oil temperature was ramped to get to above 265°C at the end of the esterification. When the esterification was completed (indicative factors are: head temperature declining, batch clarity, distillate amount, polymer temperature), $H_3PO_4$ (as a solution in EG at 1% wt. phosphorous) and, 5 minutes later, $Sb_3O_3$ (as a solution in EG at 1% wt. antimony) were added to the reaction mixture to get about 11 ppm of P and about 290 ppm of Sb in the final polymer. The pressure was then reduced by pressure ramp to full vacuum. The oil temperature was ramped to 275°C. Once the desired agitator power was obtained, the polymerized material was forced from the polymerization vessel with nitrogen and pelletized.

The main properties of the pellets obtained with standard petrochemical ethylene glycol and EG 001 are reported in the Table 7. Also in the case of direct esterification, the polyesters produced with pure ethylene glycol and the bio-based mixture of ethylene glycol and 1,2-diols have similar properties.

Table 7. Comparison of polyester produced by direct esterification with pure ethylene glycol (TPA-01) and EG 001 bio-based mixture of ethylene glycol and 1,2-diols

| Sample ID | Glycol | IV, dl/g | COOH meq/kg | P ppm | Sb ppm | L* | a* | b* | DEG Mole % | IPA Mole % | |
|---|---|---|---|---|---|---|---|---|---|---|---|
| TPA-01 | Standard Petro-EG | 0,472 | 17 | 11 | 269 | 67,9 | -2,4 | 5,4 | 2,4 | 3,4 | |
| TPA-02 | EG-001 | 0,472 | 16 | 9 | 308 | 67,7 | -1,6 | 12,1 | 2,2 | 3,3 | |
| Even the b* of 12.1 is suitable for preforms and bottles. | | | | | | | | | | | |

Example 8. Solid State Polymerization.

Control TPA-01 and bio-based TPA-02 polyester resin samples, prepared by direct esterification, were subjected to IV increase by means of standard solid state polymerization (SSP). The process was conducted in a vacuum oven at the temperature of 210°C and at a pressure of 1-2mbar. The final resin IV was 0.76 dl/g both for the PET obtained with petrochemical EG (Sample ID: SSP-01) and for the one made with EG-001 (Sample ID: SSP-06).

Example 9. Preparation of preforms and bottles

Control sample SSP-02 and bio-based sample SSP-06 were used to produce polyester bottle preforms by means of a standard injection molding process.

Injection molding was conducted on an Arburg 1000-420C single cavity injection unit, having a 30mm barrel and equipped with a cooling robot. The preform was a 27.8 g design, with a 4.0mm wall thickness, and a standard 28mm PCO finish. The polyester resin was dried for about 6 hours at 175°C in a desiccant bed air dryer and dry blended with various amount of the toner mixture of Amaplast Blue HB (Colour Index Solvent Blue 138, CAS Number 403668-77-9) and Amaplast Violet PK (Colour Index Sovlent Violet 50, CAS Number 403668-75-8) in a weight ratio of 0.93 parts Blue HB to 0.67 parts Blue 138 to bring the color hue of the preform to neutral gray. The polyester of interest was then injection molded at 285 C (barrel temperature) with a cycle time of 18 seconds. The first 3 preforms were discarded and the rest were collected as they were produced.

Table 8 summarizes the main properties of the preforms produced. The preform from bio-based sample SSP-06 was characterized by all the techniques.

Table 8. Comparison of preforms produced from bio-based and petroleum derived polyester.

| Sample ID | Predecessor Polyester sample | Toner ppm | $L^*$ | $a^*$ | $b^*$ | Tm | Tc | Tg | % Crist | ½ time |
|---|---|---|---|---|---|---|---|---|---|---|
| Preform-01 | SSP-02 | none | 58,22 | -0,26 | 12,31 | NA | NA | NA | NA | NA |
| Preform-02 | SSP-02 | 2 | 56,57 | 0,51 | 7,55 | NA | NA | NA | NA | NA |
| Preform-03 | SSP-06 | 2.4 | 58,49 | -0,01 | 6,66 | NA | NA | NA | NA | NA |
| Preform-04 | SSP-06 | 4.8 | 55,03 | 1,26 | 3,66 | 242.1 | 143.3 | 78.3 | <1 | 76.3 |

The use of small amount of indicated toner brought to neutral gray the color of the both the preforms containing standard petrochemical EG and EG-001. As the use of the toner is conventional. The polyester resin with toner is a preferred embodiment. It is remarkable the similarity in colors of the preforms. It is unexpected that the colors are similar enough that the same amount of toner would achieve almost the same color in both the petroleum derived polyester resin and the bio-based polyester resin.

The Bio-based preforms (Preform-03 and Preform-04) were converted in a 500ml bottles with a Sidel SBO1 blow molding machine.

Table 9 summarizes the properties of the bottles produced. It is remarkable that the optical properties of the bottles are fully compatible with the requirements for bottles applications.

Table 9. Properties of bio-based bottles

| | Predecessor preform sample | Haze | $L^*$ | $a^*$ | $b^*$ | Sidewall cristallinity % |
|---|---|---|---|---|---|---|
| Bottle-01 | **Preform-03** | 1,95 | 89,98 | -0,22 | 1,89 | NA |
| Bottle-02 | **Preform-04** | 2,67 | 89,13 | -0,04 | 1,48 | 25.81 |

The reported examples highlight that the disclosed composition comprising ethylene glycol and 1,2-diols is suitable for producing polyester resin, preforms and bottles.

**Claims**

**1.** A polyester bottle or polyester preform comprising a polyester resin, said polyester resin made from a composition comprising a plurality of diols comprising ethylene glycol, and diols selected from the group of diols having a formula of $C_nH_z(OH)_2$, where n is the total number of carbons and is an integer in the range from 3 to 20, z is an integer in the range from 0 to 2n, and $C_1$ and $C_2$ are each attached to one of the OH groups of the formula wherein at least a portion of the plurality of diols is comprised of bio-based diols and the sum of the mole % of all the diols in the composition is 100 mole %, wherein the composition comprising the plurality of diols is substantially free of diols which absorb light at a wavelength of 275 nm, so that the percent light transmission of the composition at a wavelength of 275 nm is greater than 40%.

2. The polyester bottle or polyester preform of claim 1, wherein the percent light transmission of the composition comprising the plurality of diols at a wavelength of 275 nm is greater than a value selected from the group consisting of 50%, 60%, 70%, 80%, 90% and 95%.

3. The polyester bottle or polyester preform of claim 1 or 2, wherein the plurality of diols further comprises at least one cyclic diol of the formula $C_mH_x(OH)_2$ where m is the total number of carbon atoms and is an integer greater than 4 and x = 2m-2.

4. The polyester bottle or polyester preform of any of claims 1 to 3, wherein the mole percent of ethylene glycol of the diols of the composition comprising the plurality of diols is greater than a value selected from the group consisting of 80%, 85%, 90%, 95% and 98%.

5. The polyester bottle or polyester preform of any of claims 1 to 4, wherein the diols of the formula $C_nH_z(OH)_2$ are further selected from the group consisting of 1,2-Propylene glycol, 1,2-Butanediol and 1,2-Pentanediol.

6. The polyester bottle or polyester preform of claim 5, wherein one of the diols of the formula $C_nH_z(OH)_2$ is 1,2-Propylene glycol and is present at less than a value selected from the group consisting of 15, 12, 10, 7, 5, 3 and 2 mole percent of the diols in the composition comprising the plurality of diols.

7. The polyester bottle or polyester preform of claim 5, wherein one of the diols of the formula $C_nH_z(OH)_2$ is 1,2-Butanediol and is present at less than a value selected from the group consisting of 10, 8, 5, 3, 2 and 1mole percent of the diols in the composition comprising the plurality of diols.

8. The composition of claim 5 , wherein the one of the diols of the formula $C_nH_z(OH)_2$ is 1,2- Pentanediol and is present at less than a value selected from the group consisting of 5, 4, 3, 2 and 1 mole percent of the diols in the composition comprising the plurality of diols.

9. The polyester bottle or polyester preform of any of claims 1 to 8, wherein the plurality of diols further comprises at least one cyclic diol of the formula $C_mH_x(OH)_2$ where m is the total number of carbon atoms and is an integer greater than 4 and x= 2m-2, and C1 and C2 are each attached to an OH of the formula.

10. The polyester bottle or polyester preform of claim 9, wherein the at least one cyclic diol of the formula $C_mH_x(OH)_2$ is present at less than a value selected from the group consisting of 2, 1.5, 1, 0.5, 0.3 and 0.2 mole percent of the diols in the composition comprising the plurality of diols.

11. The polyester bottle or polyester preform of any of claims 9 to 10, wherein the at least one cyclic diol of the formula $C_mH_x(OH)_2$ is selected from the group consisting of 1,2-Cyclopentanediols, 1,2-Cyclohexanediols and 1,2-Cycloheptanediols.

12. The polyester bottle or polyester preform of any of claims claim 1 to 11, wherein the percent light transmission of the plurality of diols at a wavelength of 275nm is greater than a value selected from the group consisting of 40%, 50%, 60%,70%, 80%, 90% and 95%.

13. The polyester bottle or polyester preform of any of claims 1 to 12, wherein the bio-based diols are obtained from the conversion of a ligno-cellulosic biomass feedstock stream.

14. The polyester bottle or polyester preform of claim 13, wherein at least 25 mole % of the diols in the composition are bio-based diols obtained from the conversion of a ligno-cellulosic biomass feedstock stream.

15. The polyester bottle or polyester preform of claim 13, wherein at least 50 mole % of the diols in the composition are bio-based diols obtained from the conversion of a ligno-cellulosic biomass feedstock stream.

16. The polyester bottle or polyester preform of claim 13, wherein at least 75 mole % of the diols in the composition are bio-based diols obtained from the conversion of a ligno-cellulosic biomass feedstock stream.

17. The polyester bottle or polyester preform of any of claims 13 to 16, wherein the composition comprises petroleum derived ethylene glycol.

18. The polyester bottle or polyester preform of any of claims 1to 13, wherein all the diols of the plurality of diols are bio-based diols obtained from the conversion of a ligno-cellulosic biomass feedstock stream.

19. The polyester bottle or polyester preform of any of claims 13 to 18, wherein at least a portion of the plurality of diols obtained from the conversion of a ligno-cellulosic biomass feedstock stream has been obtained from a liquid stream comprising of solubilized C5 and C6 sugars which have been removed from the ligno-cellulosic biomass feedstock stream and the amount of solubilized C5 sugars in the liquid stream is greater than the amount of solubilized C6 sugars.

20. The polyester bottle or polyester preform of claim 19, wherein the polyester resin further comprises acid moieties and at least 85 mole % of the acid moieties are derived from terephthalic acid or its dimethyl ester.

**Patentansprüche**

1. Polyesterflasche oder Polyestervorform, umfassend ein Polyesterharz, wobei das Polyesterharz aus einer Zusammensetzung hergestellt ist, die eine Mehrzahl an Diolen umfasst, umfassend Ethylenglykol und Diole, ausgewählt aus der Gruppe von Diolen mit der Formel $C_nH_z(OH)_2$, wobei n die Gesamtzahl an Kohlenstoffen ist und eine ganze Zahl im Bereich von 3 bis 20 ist, z eine ganze Zahl im Bereich von 0 bis 2n ist, und $C_1$ und $C_2$ jeweils an eine der OH-Gruppen der Formel gebunden sind wobei zumindest ein Teil der Mehrzahl an Diolen aus biobasierten Diolen besteht und die Summe der Mol-% aller Diole in der Zusammensetzung 100 Mol-% beträgt, wobei die Zusammensetzung, die die Mehrzahl an Diolen umfasst, im Wesentlichen frei von Diolen ist die Licht bei einer Wellenlänge von 275 nm absorbieren, so dass die prozentuale Lichtdurchlässigkeit der Zusammensetzung bei einer Wellenlänge von 275 nm größer als 40% ist.

2. Polyesterflasche oder Polyestervorform nach Anspruch 1, wobei die prozentuale Lichtdurchlässigkeit der Zusammensetzung, die die Mehrzahl an Diolen umfasst, bei einer Wellenlänge von 275 nm größer ist als ein Wert, der ausgewählt ist aus der Gruppe bestehend aus 50%, 60%, 70%, 80%, 90% und 95%.

3. Polyesterflasche oder Polyestervorform nach Anspruch 1 oder 2, wobei die Mehrzahl an Diolen weiterhin mindestens ein zyklisches Diol der Formel $C_mH_x(OH)_2$ umfasst, wobei m die Gesamtzahl an Kohlenstoffatomen und eine ganze Zahl größer als 4 ist und x = 2m-2.

4. Polyesterflasche oder Polyestervorform nach einem beliebigen der Ansprüche 1 bis 3, wobei der Molprozentsatz an Ethylenglykol der Diole der Zusammensetzung, die die Mehrzahl an Diolen umfasst, größer ist als ein Wert, der ausgewählt ist aus der Gruppe bestehend aus 80%, 85%, 90%, 95% und 98%.

5. Polyesterflasche oder Polyestervorform nach einem beliebigen der Ansprüche 1 bis 4, wobei die Diole der Formel $C_nH_z(OH)_2$ weiterhin ausgewählt sind aus der Gruppe bestehend aus 1,2-Propylenglykol, 1,2-Butandiol und 1,2-Pentandiol.

6. Polyesterflasche oder Polyestervorform nach Anspruch 5, wobei eines der Diole der Formel $C_nH_z(OH)_2$ 1,2-Propylenglykol ist und zu weniger vorhanden ist als ein Wert, der ausgewählt ist aus der Gruppe bestehend aus 15, 12, 10, 7, 5, 3 und 2 Molprozent der Diole in der Zusammensetzung, die die Mehrzahl an Diolen umfasst.

7. Polyesterflasche oder Polyestervorform nach Anspruch 5, wobei eines der Diole der Formel $C_nH_z(OH)_2$ 1,2-Butandiol ist und zu weniger vorhanden ist als ein Wert, der ausgewählt ist aus der Gruppe bestehend aus 10, 8, 5, 3, 2 und 1 Molprozent der Diole in der Zusammensetzung, die die Mehrzahl an Diolen umfasst.

8. Zusammensetzung nach Anspruch 5, wobei das eine der Diole der Formel $C_nH_z(OH)_2$ 1,2-Pentandiol ist und zu weniger vorhanden ist als ein Wert, der ausgewählt ist aus der Gruppe bestehend aus 5, 4, 3, 2 und 1 Molprozent der Diole in der Zusammensetzung, die die Mehrzahl an Diolen umfasst.

9. Polyesterflasche oder Polyestervorform nach einem beliebigen der Ansprüche 1 bis 8, wobei die Mehrzahl an Diolen weiterhin mindestens ein zyklisches Diol der Formel $C_mH_x(OH)_2$ umfasst, wobei m die Gesamtzahl an Kohlenstoffatomen ist und eine ganze Zahl größer als 4 und x = 2m-2 ist, und C1 und C2 jeweils an ein OH der Formel gebunden sind.

10. Polyesterflasche oder Polyestervorform nach Anspruch 9, wobei das mindestens eine zyklische Diol der Formel $C_mH_x(OH)_2$ zu weniger vorhanden ist als ein Wert, der ausgewählt ist aus der Gruppe bestehend aus 2, 1,5, 1, 0,5, 0,3 und 0,2 Molprozent der Diole in der Zusammensetzung, die die Mehrzahl an Diolen umfasst.

11. Polyesterflasche oder Polyestervorform nach einem beliebigen der Ansprüche 9 bis 10, wobei das mindestens eine zyklische Diol der Formel $C_mH_x(OH)_2$ ausgewählt ist aus der Gruppe bestehend aus 1,2-Cyclopentandiolen, 1,2-Cyclohexandiolen und 1,2-Cycloheptandiolen.

12. Polyesterflasche oder Polyestervorform nach einem beliebigen der Ansprüche 1 bis 11, wobei die prozentuale Lichtdurchlässigkeit der Mehrzahl an Diolen bei einer Wellenlänge von 275 nm größer ist als ein Wert, der ausgewählt ist aus der Gruppe bestehend aus 40%, 50%, 60%, 70%, 80%, 90% und 95%.

13. Polyesterflasche oder Polyestervorform nach einem beliebigen der Ansprüche 1 bis 12, wobei die biobasierten Diole aus der Umwandlung eines Lignozellulose-Biomasse-Ausgangsmaterialstroms erhalten werden.

14. Polyesterflasche oder Polyestervorform nach Anspruch 13, wobei es sich bei mindestens 25 Mol-% der Diole in der Zusammensetzung um biobasierte Diole handelt, die aus der Umwandlung eines Lignozellulose-Biomasse-Ausgangsmaterialstroms gewonnen werden.

15. Polyesterflasche oder Polyestervorform nach Anspruch 13, wobei es sich bei mindestens 50 Mol-% der Diole in der Zusammensetzung um biobasierte Diole handelt, die aus der Umwandlung eines Lignozellulose-Biomasse-Ausgangsmaterialstroms gewonnen werden.

16. Polyesterflasche oder Polyestervorform nach Anspruch 13, wobei es sich bei mindestens 75 Mol-% der Diole in der Zusammensetzung um biobasierte Diole handelt, die aus der Umwandlung eines Lignozellulose-Biomasse-Ausgangsmaterialstroms gewonnen werden.

17. Polyesterflasche oder Polyestervorform nach einem beliebigen der Ansprüche 13 bis 16, wobei die Zusammensetzung Ethylenglykol auf Erdölbasis umfasst.

18. Polyesterflasche oder Polyestervorform nach einem beliebigen der Ansprüche 1 bis 13, wobei alle Diole der Mehrzahl an Diolen biobasierte Diole sind, die aus der Umwandlung eines Lignozellulose-Biomasse-Ausgangsmaterialstroms gewonnen werden.

19. Polyesterflasche oder Polyestervorform nach einem beliebigen der Ansprüche 13 bis 18, wobei mindestens ein Teil der Mehrzahl an Diolen, die aus der Umwandlung eines Lignozellulose-Biomasse-Ausgangsmaterialstroms erhalten wurden, aus einem Flüssigkeitsstrom erhalten wurde, der aufgelöste C5- und C6-Zucker umfasst, die aus dem Lignozellulose-Biomasse-Ausgangsmaterialstrom entfernt wurden, und die Menge an aufgelösten C5-Zuckern in dem Flüssigkeitsstrom größer ist als die Menge an aufgelösten C6-Zuckern.

20. Polyesterflasche oder Polyestervorform nach Anspruch 19, wobei das Polyesterharz weiterhin Säurereste umfasst und mindestens 85 Mol-% der Säurereste von Terephthalsäure oder deren Dimethylester stammen.

**Revendications**

1. Bouteille en polyester ou préforme en polyester, comprenant une résine polyester, ladite résine polyester étant produite à partir d'une composition comprenant une pluralité de diols comprenant l'éthylèneglycol, et des diols choisis dans l'ensemble de diols de formule $C_nH_z(OH)_2$, dans laquelle n est le nombre total d'atomes de carbone et est un nombre entier dans la plage de 3 à 20, z est un nombre entier dans la plage de 0 à 2n, et les atomes de carbone $C_1$ et $C_2$ sont liés chacun à l'un des groupes OH de la formule, au moins une partie de la pluralité de diols étant constituée de diols d'origine biologique et la somme des % en moles de tous les diols dans la composition étant de 100 % en moles, dans laquelle la composition comprenant la pluralité de diols est essentiellement exempte de diols qui absorbent la lumière à une longueur d'onde de 275 nm, de sorte que le pourcentage de transmission de la lumière de la composition à une longueur d'onde de 275 nm est supérieur à 40 %.

2. Bouteille en polyester ou préforme en polyester selon la revendication 1, dans laquelle le pourcentage de transmission de la lumière de la composition comprenant la pluralité de diols à une longueur d'onde de 275 nm est supérieur à une valeur choisie dans l'ensemble constitué par 50 %, 60 %, 70 %, 80 %, 90 % et 95 %.

3. Bouteille en polyester ou préforme en polyester selon la revendication 1 ou 2, dans laquelle la pluralité de diols comprend en outre au moins un diol cyclique de formule $C_mH_x(OH)_2$, dans laquelle m est le nombre total d'atomes de carbone et est un nombre entier supérieur à 4 et x = 2m-2.

4. Bouteille en polyester ou préforme en polyester selon l'une quelconque des revendications 1 à 3, dans laquelle le pourcentage en moles d'éthylèneglycol des diols de la composition comprenant la pluralité de diols est supérieur à une valeur choisie dans l'ensemble constitué par 80 %, 85 %, 90 %, 95 % et 98 %.

5. Bouteille en polyester ou préforme en polyester selon l'une quelconque des revendications 1 à 4, dans laquelle les diols de formule $C_nH_z(OH)_2$ sont choisis en outre dans l'ensemble constitué par le 1,2-propylèneglycol, le 1,2-butanediol et le 1,2-pentanediol.

6. Bouteille en polyester ou préforme en polyester selon la revendication 5, dans laquelle l'un des diols de formule $C_nH_z(OH)_2$ est le 1,2-propylèneglycol et est présent à moins d'une valeur choisie dans l'ensemble constitué par 15, 12, 10, 7, 5, 3 et 2 pour cent en moles des diols dans la composition comprenant la pluralité de diols.

7. Bouteille en polyester ou préforme en polyester selon la revendication 5, dans laquelle l'un des diols de formule $C_nH_z(OH)_2$ est le 1,2-butanediol et est présent à moins d'une valeur choisie dans l'ensemble constitué par 10, 8, 5, 3, 2 et 1 pour cent en moles des diols dans la composition comprenant la pluralité de diols.

8. Composition selon la revendication 5, dans laquelle ledit un des diols de formule $C_nH_z(OH)_2$ est le 1,2-pentanediol et est présent à moins d'une valeur choisie dans l'ensemble constitué par 5, 4, 3, 2 et 1 pour cent en moles des diols dans la composition comprenant la pluralité de diols.

9. Bouteille en polyester ou préforme en polyester selon l'une quelconque des revendications 1 à 8, dans laquelle la pluralité de diols comprend en outre au moins un diol cyclique de formule $C_mH_x(OH)_2$, dans laquelle m est le nombre total d'atomes de carbone et est un nombre entier supérieur à 4 et x = 2m-2, et les atomes de carbone $C_1$ et $C_2$ sont liés chacun à un groupe OH de la formule.

10. Bouteille en polyester ou préforme en polyester selon la revendication 9, dans laquelle ledit au moins un diol cyclique de formule $C_mH_x(OH)_2$ est présent à moins d'une valeur choisie dans l'ensemble constitué par 2, 1,5, 1, 0,5, 0,3 et 0,2 pour cent en moles des diols dans la composition comprenant la pluralité de diols.

11. Bouteille en polyester ou préforme en polyester selon l'une quelconque des revendications 9 et 10, dans laquelle ledit au moins un diol cyclique de formule $C_mH_x(OH)_2$ est choisi dans l'ensemble constitué par les 1,2-cyclopentanediols, 1,2-cyclohexanediols et 1,2-cycloheptanediols.

12. Bouteille en polyester ou préforme en polyester selon l'une quelconque des revendications 1 à 11, dans laquelle le pourcentage de transmission de la lumière de la pluralité de diols à une longueur d'onde de 275 nm est supérieur à une valeur choisie dans l'ensemble constitué par 40 %, 50 %, 60 %, 70 %, 80 %, 90 % et 95 %.

13. Bouteille en polyester ou préforme en polyester selon l'une quelconque des revendications 1 à 12, dans laquelle les diols d'origine biologique sont obtenus à partir de la conversion d'un courant de matière première à base de biomasse lignocellulosique.

14. Bouteille en polyester ou préforme en polyester selon la revendication 13, dans laquelle au moins 25 % en moles des diols dans la composition sont des diols d'origine biologique obtenus à partir de la conversion d'un courant de matière première à base de biomasse lignocellulosique.

15. Bouteille en polyester ou préforme en polyester selon la revendication 13, dans laquelle au moins 50 % en moles des diols dans la composition sont des diols d'origine biologique obtenus à partir de la conversion d'un courant de matière première à base de biomasse lignocellulosique.

16. Bouteille en polyester ou préforme en polyester selon la revendication 13, dans laquelle au moins 75 % en moles des diols dans la composition sont des diols d'origine biologique obtenus à partir de la conversion d'un courant de matière première à base de biomasse lignocellulosique.

17. Bouteille en polyester ou préforme en polyester selon l'une quelconque des revendications 13 à 16, dans laquelle la composition comprend de l'éthylèneglycol dérivé du pétrole.

18. Bouteille en polyester ou préforme en polyester selon l'une quelconque des revendications 1à 13, dans laquelle tous les diols de la pluralité de diols sont des diols d'origine biologique obtenus à partir de la conversion d'un courant de matière première à base de biomasse lignocellulosique.

19. Bouteille en polyester ou préforme en polyester selon l'une quelconque des revendications 13 à 18, dans laquelle au moins une partie de la pluralité de diols obtenus à partir de la conversion d'un courant de matière première à base de biomasse lignocellulosique a été obtenue à partir d'un courant de liquide comprenant des sucres en C5 et C6 solubilisés qui ont été extraits du courant de matière première à base de biomasse lignocellulosique et la quantité de sucres en C5 solubilisés dans la courant de liquide est supérieure à la quantité de sucres en C6 solubilisés.

20. Bouteille en polyester ou préforme en polyester selon la revendication 19, dans laquelle la résine polyester comprend en outre des fractions acides et au moins 85 % en moles des fractions acides sont dérivées de l'acide téréphtalique ou de son ester diméthylique.

Optical transmittance

wavelength (nm)

transmittance %

Ethylene glycol (control)
EG-001
EG-002

FIGURE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100028512 A1
- US 8198486 B
- US 20110312051 A
- US 2008103340 A
- WO 2008057317 A
- WO 2007014646 A2

- US 4880473 A
- US 5366558 A
- US 5188673 A
- US 5705369 A
- US 6228177 B

**Non-patent literature cited in the description**

- *CHEMICAL ABSTRACTS,* 403668-77-9
- *CHEMICAL ABSTRACTS,* 403668-75-8